# EUROPEAN PATENT SPECIFICATION

(11) **EP 4 194 200 B1**
(45) Date of publication and mention of the grant of the patent: **20.08.2025**
(21) Application number: 22775269.8
(22) Date of filing: 15.03.2022
(51) Int. Cl.: B32B 27/00, C09J 9/02, C09J 201/00, C09J 7/38, B32B 3/08, B32B 7/12, B32B 15/09, B32B 15/20, B32B 27/10, B32B 27/36, C09J 5/00, C09J 7/29, B32B 7/14

(54) **ELECTRICALLY DEBONDABLE ADHESIVE SHEET, AND METHOD FOR RELEASING ELECTRICALLY DEBONDABLE ADHESIVE SHEET**
ELEKTRISCH ABLÖSBARE KLEBEFOLIE UND VERFAHREN ZUM FREIGEBEN DER ELEKTRISCH ABLÖSBAREN KLEBEFOLIE
FEUILLE ADHÉSIVE ÉLECTRIQUEMENT PELABLE, ET PROCÉDÉ DE PELAGE DE CELLE-CI

(30) Priority: 26.03.2021 JP 2021053317
(43) Date of publication of application: 14.06.2023
(73) Proprietor: LINTEC CORPORATION, Itabashi-ku Tokyo 173-0001 (JP)
(72) Inventor: AMANO Yasuyuki, Tokyo 173-0001 (JP); KAWADA Satoshi, Tokyo 173-0001 (JP)
(74) Representative: J A Kemp LLP
(86) International application number: PCT/JP2022/011549
(87) International publication number: WO 2022/202479

(56) References cited:
- WO-A1-2018/230606
- WO-A1-2018/230606
- JP-A- 2011 052 056
- JP-A- 2015 160 906
- JP-A- 2019 156 912
- JP-A- 2019 156 912
- JP-A- 2019 156 914
- JP-A- 2020 050 846
- JP-A- 2020 147 761
- JP-A- 2020 147 761
- JP-A- 2021 028 388
- JP-A- 2021 028 388

## Description

### [Technical Field]

The present invention relates to an electrically peelable pressure-sensitive adhesive sheet and a method for peeling the electrically peelable pressure-sensitive adhesive sheet.

### [Background Art]

As one of the properties of pressure-sensitive adhesive sheets, for example, repeelability may be required in applications such as tapes for temporary fixation, surface protection films, masking tapes for coating or decoration, and repeelable notes.

When repeelable pressure-sensitive adhesive sheets are affixed to adherends, such tack that the repeelable pressure-sensitive adhesive sheets do not peel from the adherends is required during transport, storage, processing, and the like, and on the other hand, repeelability with which the repeelable pressure-sensitive adhesive sheets can be easily removed is required after they complete serving functions.

As pressure-sensitive adhesives used for such repeelable pressure-sensitive adhesive sheets, pressure-sensitive adhesives and pressure-sensitive adhesive sheets whose tack can decrease by applying a voltage are known.

For example, Patent Literature 1 discloses an electrically peelable pressure-sensitive adhesive sheet being a pressure-sensitive adhesive sheet having a substrate for the passage of a current including an electrically conductive layer and a substrate layer, an electrically peelable first pressure-sensitive adhesive layer formed on a side of the electrically conductive layer, and a second pressure-sensitive adhesive layer formed on a side of the substrate layer, wherein the substrate for the passage of a current has extension portions elongating and extending more than the first pressure-sensitive adhesive layer and the second pressure-sensitive adhesive layer in the surface extending direction of the pressure-sensitive adhesive sheet.

Patent Literature 2 describes a laminated body including at least a first layer, a first adhesive layer, and a patterned structure in this order, wherein the first adhesive layer has an adhesive force that can decrease in response to, for instance, heat treatment, energy ray irradiation or an electric field treatment. A second adhesive layer having a different composition may be provided on a side of the structure opposite to the first adhesive layer side.

Patent Literature 3 describes pressure sensitive adhesives whose tack is affected by application of a voltage. Specifically, this document describes an adhesive sheet joint separating method. An adhesive sheet is discussed that has a pressure-sensitive adhesive layer comprising electrolyte interposed between adherends to join them together. A voltage can be applied to the adhesive layer so that potential difference occurs in the thickness direction of the adhesive layer, and separates the adherends. The adherends may be conductive, for instance may contain a base layer and a conductive layer. The adherends may themselves be attached to a base material via a pressure sensitive adhesive layer.

Patent Literature 4 describes an electrically peelable adhesive sheet which includes: an energization substrate having a conductive layer; a first adhesive layer composed of an electrically peelable adhesive agent formed on the conductive layer of the energization substrate; a second adhesive layer formed on a face opposite to the first adhesive layer of the energization substrate; and an electrode contact portion being a portion on which an adherend is not adhered at least on one face. The face on which an adherend is not adhered in the electrode contact portion has a portion where the conductive layer is not exposed in at least a part thereof. The substrate may further include a coat layer.

Patent Literature 5 describes a laminate which comprises: a first adhesive layer that one surface can be fixed to an installed surface, wherein the adhesive force decreases on exposure to energy or a substance; an adhesive force reducing layer that is arranged next to the first adhesive layer and can supply the appointed energy or substance decreasing the adhesive power of the first adhesive layer; and a shield layer which can prevent discharge of the appointed energy or substance supplied from the adhesive force reducing layer to another surface of the first adhesive layer. The first adhesive layer can be formed of an electrically releasable adhesive. The laminate may be flexible.

Patent Literature 6 describes an electrically peelable adhesive sheet including: an energization substrate having conductivity at least on one side thereof; a first adhesive layer including an electrically peelable adhesive agent formed on the side having the conductivity of the energization substrate; and a second adhesive layer formed on an opposite side of the first adhesive layer of the energization substrate. The electrically peelable type adhesive sheet further includes a plurality of connection target parts and a connection part configured to connect between each of the plurality of connection target parts. The sheet may be bonded to a first and a second adherend, which may be conductive.

### [Citation List]

### [Patent Literature]

[Patent Literature 1] Japanese Patent Laid-Open No. 2019-156914
[Patent Literature 2] WO 2018230606 A1
[Patent Literature 3] JP 2020-147761 A
[Patent Literature 4] JP 2021-028388 A
[Patent Literature 5] JP 2015-160906 A
[Patent Literature 6] JP 2019-156912 A

### [Summary of Invention]

### [Technical Problem]

In the electrically peelable pressure-sensitive adhesive sheet described in Patent Literature 1, the substrate for the passage of a current has the extension portions extending in the plane direction, and therefore, for example, when the electrically peelable pressure-sensitive adhesive sheet is used in applications for temporarily fixing electronic components, the extension portions of the substrate for the passage of a current come into contact with other members, which is likely to cause malfunctions and troubles in electronic equipment.

Under such circumstances, there is a need for a novel electrically peelable pressure-sensitive adhesive sheet that can be preferably used in various applications and whose tack can be easily decreased by voltage application.

### [Solution to Problem]

The present invention is defined in claim 1, and provides an electrically peelable pressure-sensitive adhesive sheet including an electrically conductive substrate having a support, an intermediate layer, and an electrically conductive layer in this order, a first pressure-sensitive adhesive layer having electrical peelability laminated on a side of the electrically conductive layer of the electrically conductive substrate, and a second pressure-sensitive adhesive layer laminated on a side of the support, wherein the electrically conductive substrate has substantially no extension portion elongating and exposed more than the pressure-sensitive adhesive layers in the surface extending direction, and at least part of the intermediate layer includes an electrically conductive pressure-sensitive adhesive layer. Further, a method for peeling the sheet of claim 1 is defined in claim 7.

### [Advantageous Effects of Invention]

An electrically peelable pressure-sensitive adhesive sheet in one preferred aspect of the present invention can be preferably used in various applications such as applications for temporarily fixing electronic components, building members, vehicles, or the like where the attachment space is limited, and the tack can be easily decreased by voltage application.

### [Brief Description of Drawings]

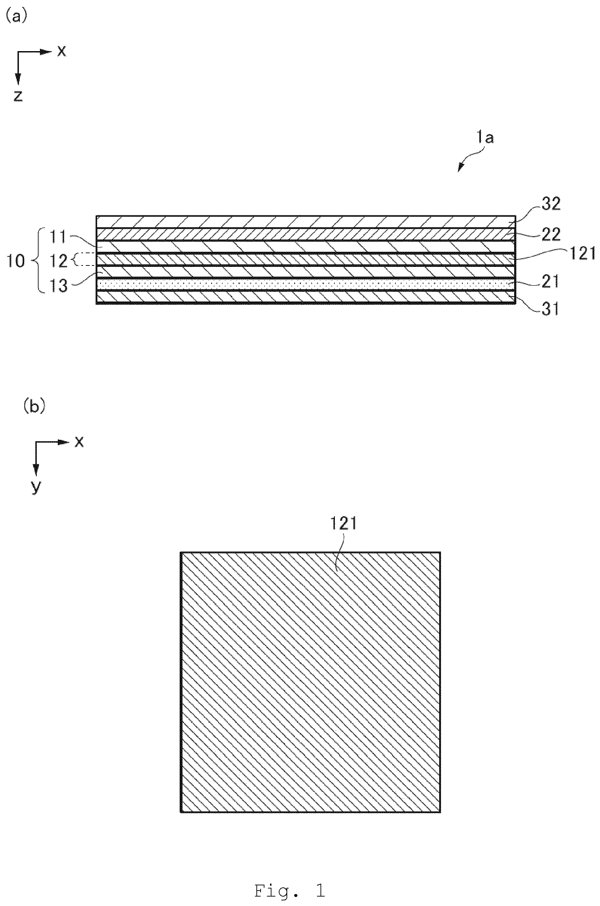

[Figure 1] (a) is a schematic cross-sectional view of a pressure-sensitive adhesive sheet 1a in the thickness direction, showing one example of the configuration of an electrically peelable pressure-sensitive adhesive sheet in one aspect of the present invention, and (b) is a plan view when a laminated structure in which only the electrically conductive layer and intermediate layer of the pressure-sensitive adhesive sheet 1a shown in (a) are taken out is observed from the intermediate layer side.

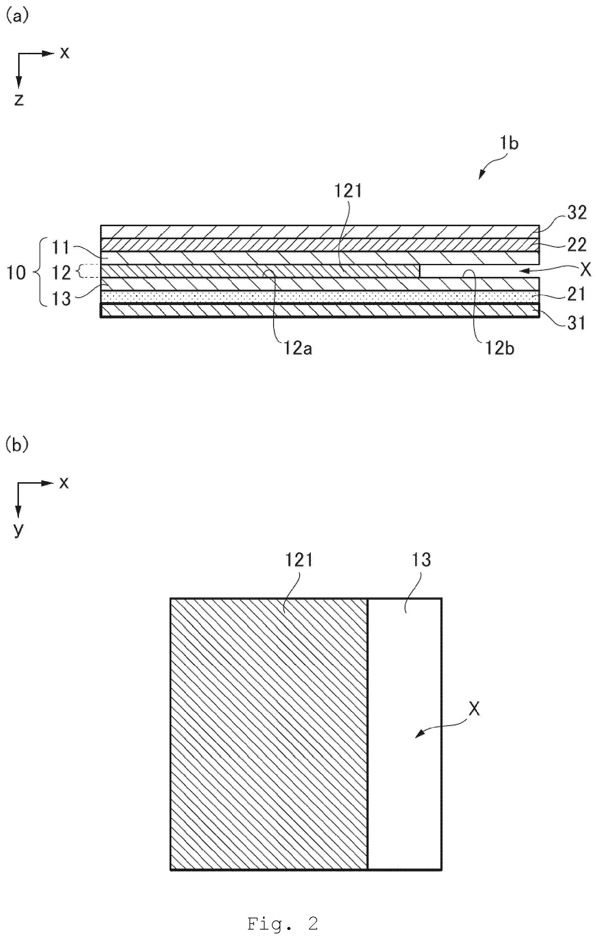

[Figure 2] (a) is a schematic cross-sectional view of a pressure-sensitive adhesive sheet 1b in the thickness direction, showing one example of the configuration of an electrically peelable pressure-sensitive adhesive sheet in one aspect of the present invention, and (b) is a plan view when a laminated structure in which only the electrically conductive layer and intermediate layer of the pressure-sensitive adhesive sheet 1b shown in (a) are taken out is observed from the intermediate layer side.

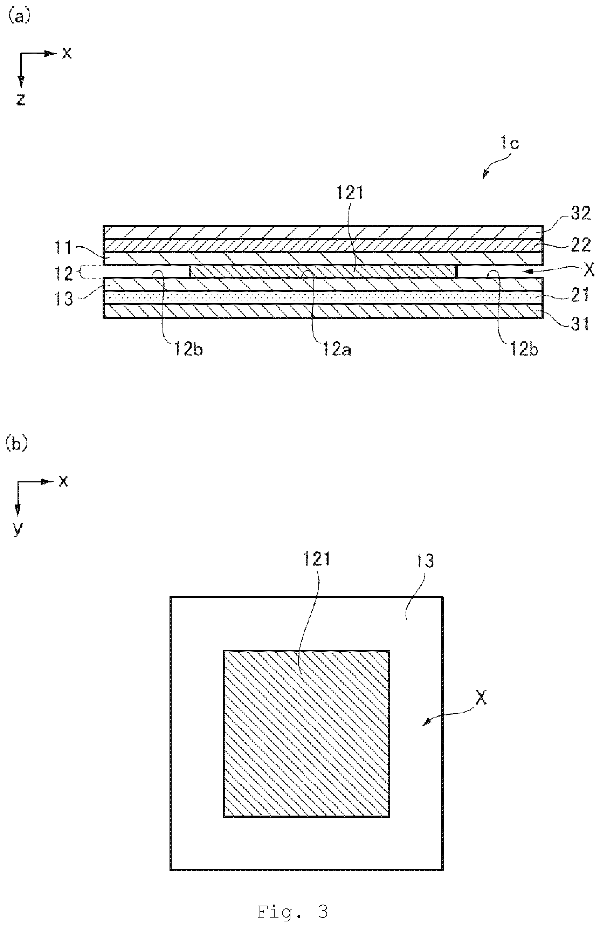

[Figure 3] (a) is a schematic cross-sectional view of a pressure-sensitive adhesive sheet 1c in the thickness direction, showing one example of the configuration of an electrically peelable pressure-sensitive adhesive sheet in one aspect of the present invention, and (b) is a plan view when a laminated structure in which only the electrically conductive layer and intermediate layer of the pressure-sensitive adhesive sheet 1c shown in (a) are taken out is observed from the intermediate layer side.

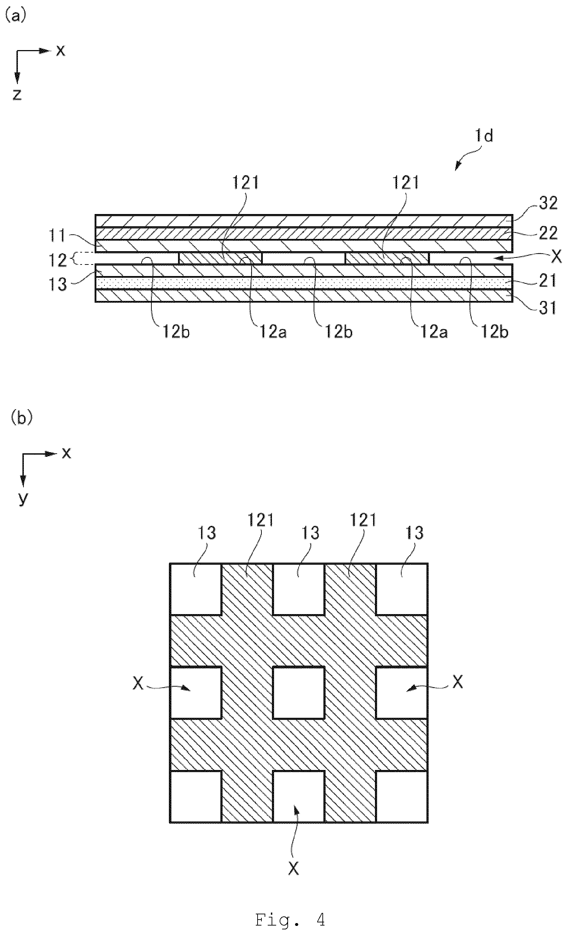

[Figure 4] (a) is a schematic cross-sectional view of a pressure-sensitive adhesive sheet 1d in the thickness direction, showing one example of the configuration of an electrically peelable pressure-sensitive adhesive sheet in one aspect of the present invention, and (b) is a plan view when a laminated structure in which only the electrically conductive layer and intermediate layer of the pressure-sensitive adhesive sheet 1d shown in (a) are taken out is observed from the intermediate layer side.

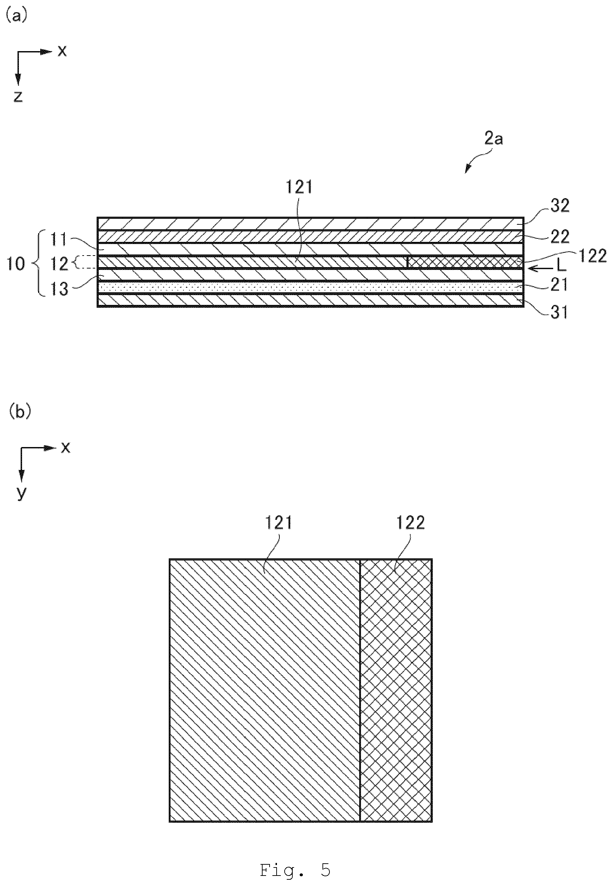

[Figure 5] (a) is a schematic cross-sectional view of a pressure-sensitive adhesive sheet 2a in the thickness direction, showing one example of the configuration of an electrically peelable pressure-sensitive adhesive sheet in one aspect of the present invention, and (b) is a plan view when a laminated structure in which only the electrically conductive layer and intermediate layer of the pressure-sensitive adhesive sheet 2a shown in (a) are taken out is observed from the intermediate layer side.

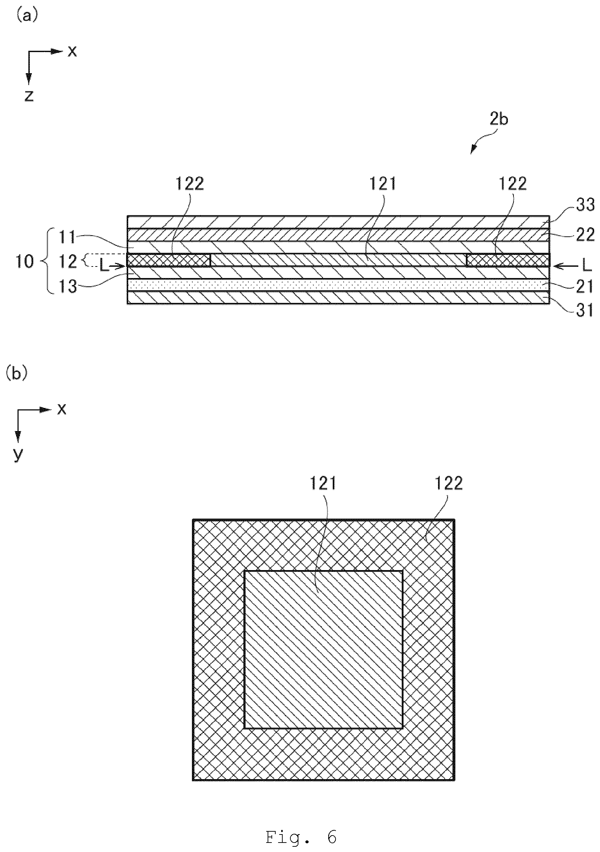

[Figure 6] (a) is a schematic cross-sectional view of a pressure-sensitive adhesive sheet 2b in the thickness direction, showing one example of the configuration of an electrically peelable pressure-sensitive adhesive sheet in one aspect of the present invention, and (b) is a plan view when a laminated structure in which only the electrically conductive layer and intermediate layer of the pressure-sensitive adhesive sheet 2b shown in (a) are taken out is observed from the intermediate layer side.

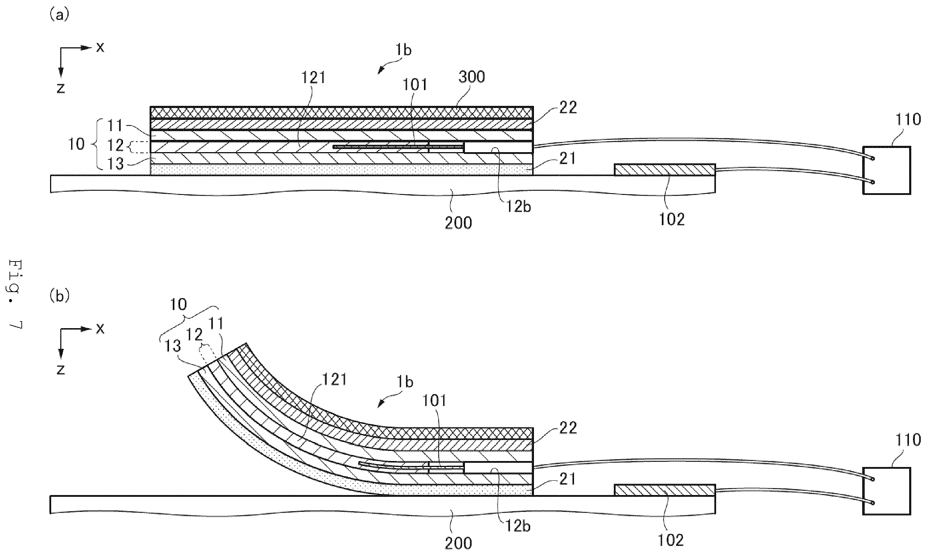

[Figure 7] Figure 7 shows schematic diagrams showing one example of a method for peeling the pressure-sensitive adhesive sheet 1b in Figure 1, which is an electrically peelable pressure-sensitive adhesive sheet in one aspect of the present invention.

### [Description of Embodiments]

For the numerical value ranges described herein, the upper limit value and the lower limit value can be arbitrarily combined. For example, when "preferably 20 to 120, more preferably 40 to 90" is described as a numerical value range, the range of "20 to 90" and the range of "40 to 120" are also included in the numerical value range described herein. In addition, for example, when "preferably 20 or more, more preferably 40 or more, and preferably 120 or less, more preferably 90 or less" is described as a numerical value range, the range of "20 to 90" and the range of "40 to 120" are also included in the numerical value range described herein.

In addition, for example, the description of "60 to 100", as a numerical value range described herein means the range of "60 or more and 100 or less".

Further, in the definition of the upper limit value and the lower limit value described herein, the numerical value range of the lower limit value to the upper limit value can be defined by appropriately selecting them from choices and arbitrarily combining them.

A plurality of various requirements described as preferred aspects described herein can be combined.

As used herein, for example, "(meth)acrylate" is used as a term indicating both "acrylate" and "methacrylate", and the same applies to other similar terms.

The "active components" of an electrically peelable pressure-sensitive adhesive composition mean components excluding the diluent solvent, water or an organic solvent, of the components included in the electrically peelable pressure-sensitive adhesive composition.

As used herein, the thickness of each layer constituting an electrically peelable pressure-sensitive adhesive sheet means a value measured in accordance with JIS K6783, Z1702, or Z1709 and can be measured using, for example, a constant pressure thickness measuring instrument (manufactured by TECLOCK Co., Ltd., product name "PG-02J").

As used herein, mass average molecular weight is a value in terms of polystyrene measured by a gel permeation chromatography (GPC) method and is specifically a value measured based on a method described in Examples.

As used herein, the determination of whether an object is "electrically conductive" or not can be made based on the following test method.

### (Test Method for Determining Whether Object Is Electrically Conductive or Not)

An object is connected via a lead to the middle of an electric circuit in which a voltage application apparatus and a miniature bulb are connected in series, to create an electric circuit. The lead is connected to the object by the contact of its tip with the surface of the object. When a voltage of 2.5 V is applied by a direct current power supply apparatus and passed through the created electric circuit, whether the miniature bulb lights or not is visually observed. When the lighting of the miniature bulb is confirmed, the object is determined as "electrically conductive". On the other hand, when the lighting of the miniature bulb cannot be confirmed, the object is determined as "electrically non-conductive (insulating) ".

As used herein, the determination of whether a target pressure-sensitive adhesive layer has "electrical peelability" or not can be made based on the following test method.

### (Test Method for Determining Whether Target Pressure-Sensitive Adhesive Layer Is Electrically Peelable or Not)

An aluminum foil (for example, product name "Arumi Tantai S Tsuya 50 Fukuoka" manufactured by NIPPON METAL FOIL CO., LTD., thickness: 50 µm) is laminated on one pressure-sensitive adhesive surface of a target pressure-sensitive adhesive layer to fabricate a test sheet. The other pressure-sensitive adhesive surface of the pressure-sensitive adhesive layer of the test sheet is affixed to a stainless steel plate (SUS304, polishing No. 360), which is an adherend, and a roller having a weight of 2 kg is reciprocated once to pressure-bond the test sheet to the adherend. Then, the laminate is allowed to stand in an environment of 23°C and 50% RH (relative humidity) for 30 min after the affixation to provide a measurement sample.

Two of the measurement samples are prepared, and for one measurement sample, the test sheet of the measurement sample is peeled from the adherend in an environment of 23°C and 50% RH (relative humidity) under the conditions of a peel rate of 300 mm/min and a peel angle of 180° using a tensile tester (for example, product name "TENSILON" manufactured by ORIENTEC CORPORATION), and the value (unit: N/25 mm) measured at this time is taken as the tack before voltage application.

Next, for the other tack measurement sample, a voltage application apparatus (for example, product name "KH-100H" manufactured by Takasago, Ltd.) is used, the anode terminal is connected to the aluminum foil of the test sheet, the cathode terminal is connected to the stainless steel plate, which is the adherend, and a voltage of 10 V is applied for 60 sec. Then, after the voltage application, the measurement sample is allowed to stand for 1 min, and then the test sheet of the measurement sample is peeled in an environment of 23°C and 50% RH (relative humidity) under the conditions of a peel rate of 300 mm/min and a peel angle of 180° using a tensile tester, and the value (unit: N/25 mm) measured at this time is taken as the tack after voltage application.

The tack decrease rate is calculated from the values of the tack before and after voltage application by the following formula (i): [tack decrease rate (%)] = 100 - [tack of test sheet after voltage application]/[tack of test sheet before voltage application] × 100

Here, when the tack decrease rate is 50% or more, the pressure-sensitive adhesive layer to be measured is determined as an "electrically peelable pressure-sensitive adhesive layer". On the other hand, when the tack decrease rate is less than 50%, the pressure-sensitive adhesive layer to be measured is determined as an "electrically non-peelable pressure-sensitive adhesive layer".

### [Configuration of Electrically Peelable Pressure-Sensitive Adhesive Sheet]

The electrically peelable pressure-sensitive adhesive sheet (hereinafter also simply referred to as a "pressure-sensitive adhesive sheet") of the present invention includes an electrically conductive substrate having a support, an intermediate layer, and an electrically conductive layer in this order, a first pressure-sensitive adhesive layer having electrical peelability laminated on a side of the electrically conductive layer of the electrically conductive substrate, and a second pressure-sensitive adhesive layer laminated on a side of the support, and meets the following requirements (I) and (II):
- Requirement (I): the electrically conductive substrate has substantially no extension portion elongating and exposed more than the first pressure-sensitive adhesive layer and the second pressure-sensitive adhesive layer in the surface extending direction of the electrically conductive substrate.
- Requirement (II): at least part of the intermediate layer includes an electrically conductive pressure-sensitive adhesive layer.

(a) of Figures 1 to 6 shows a schematic cross-sectional view of each pressure-sensitive adhesive sheet in the thickness direction, showing one example of the configuration of a pressure-sensitive adhesive sheet of the present invention.

Like the pressure-sensitive adhesive sheet 1a shown in Figure 1(a) or the like, the pressure-sensitive adhesive sheet of the present invention includes an electrically conductive substrate 10 having a support 11, an intermediate layer 12, and an electrically conductive layer 13 in this order in the vertical direction z (thickness direction).

In the electrically conductive substrate 10, other layers such as an easily adhesive layer may be provided at least one of between the support 11 and the intermediate layer 12 and between the intermediate layer 12 and the electrically conductive layer 13, or the support 11, the intermediate layer 12, and the electrically conductive layer 13 may be directly laminated without other layers being provided. However, a configuration in which the support 11, the intermediate layer 12, and the electrically conductive layer 13 are directly laminated in this order, as shown in (a) of Figures 1 to 6 is preferred.

Like the pressure-sensitive adhesive sheet 1a shown in Figure 1(a) or the like, the pressure-sensitive adhesive sheet has a configuration in which a first pressure-sensitive adhesive layer 21 is laminated on the electrically conductive layer 13 side of the electrically conductive substrate 10, and a second pressure-sensitive adhesive layer 22 is laminated on the support 11 side.

The first pressure-sensitive adhesive layer 21 is a pressure-sensitive adhesive layer that has electrical peelability and whose tack can decrease by voltage application. On the other hand, the second pressure-sensitive adhesive layer 22 may be a pressure-sensitive adhesive layer having electrical peelability or an electrically non-peelable pressure-sensitive adhesive layer.

From the viewpoint of handling properties, like the pressure-sensitive adhesive sheet 1a shown in Figure 1(a) or the like, the pressure-sensitive adhesive sheet in one aspect of the present invention preferably has a configuration in which a release material 31 is further laminated on the pressure-sensitive adhesive surface of the first pressure-sensitive adhesive layer 21, and a release material 32 is further laminated on the pressure-sensitive adhesive surface of the second pressure-sensitive adhesive layer 22.

The two release materials 31 and 32 are preferably adjusted so that a difference occurs in peel force.

In the pressure-sensitive adhesive sheet of the present invention, the electrically conductive substrate has substantially no extension portion elongating and exposed more than the first pressure-sensitive adhesive layer and the second pressure-sensitive adhesive layer in the surface extending direction of the electrically conductive substrate, as in the requirement (I).

"The surface extending direction of the electrically conductive substrate" defined by the requirement (I) refers to both the transverse direction x and longitudinal direction y of the electrically conductive substrate in a plan view like Figure 1(b) when the electrically conductive substrate is seen in a planar view from the vertical direction z.

In the pressure-sensitive adhesive sheet meeting the requirement (I), the length of the electrically conductive substrate in the transverse direction x is equal to or less than the lengths of the first pressure-sensitive adhesive layer and the second pressure-sensitive adhesive layer in the transverse direction x (the same as the lengths or shorter than the lengths), from the schematic cross-sectional view of the pressure-sensitive adhesive sheet 1a in the vertical direction z shown in Figure 1(a). The length of the electrically conductive substrate in the longitudinal direction y is also equal to or less than the lengths of the first pressure-sensitive adhesive layer and the second pressure-sensitive adhesive layer in the longitudinal direction y (the same as the lengths or shorter than the lengths). Therefore, in Figure 1(a), a schematic cross-sectional view of the pressure-sensitive adhesive sheet 1a, the electrically conductive substrate has substantially no extension portion elongating and exposed more than the first pressure-sensitive adhesive layer and the second pressure-sensitive adhesive layer.

In the electrically peelable pressure-sensitive adhesive sheet disclosed in Patent Literature 1, in the electrically conductive substrate, extension portions elongating and exposed more than the first pressure-sensitive adhesive layer and the second pressure-sensitive adhesive layer in the surface extending direction of the electrically conductive substrate are present (see Figure 1 of Patent Literature 1). In the electrically peelable pressure-sensitive adhesive sheet disclosed in Patent Literature 1 described above, the extension portions correspond to regions for the connection of terminals for passing a current.

However, when the electrically peelable pressure-sensitive adhesive sheet in which the extension portions are present is used in applications for temporarily fixing electronic components, building members, vehicles, or the like, the extension portions of the substrate for the passage of a current may come into contact with other members, which is also a factor causing malfunctions and troubles in electronic equipment.

In order to avoid such a problem, in the pressure-sensitive adhesive sheet of the present invention, the electrically conductive substrate has substantially no extension portion elongating and exposed more than the first pressure-sensitive adhesive layer and the second pressure-sensitive adhesive layer, as defined by the requirement (I).

"Has substantially no extension portion" in the requirement (I) is a definition that denies incorporating a configuration in which an extension portion is provided for a predetermined purpose, and is not a definition that excludes even such a configuration that in the electrically conductive substrate, a region protruding slightly more than the first pressure-sensitive adhesive layer and the second pressure-sensitive adhesive layer in the transverse direction x and the longitudinal direction y is present because of manufacturing problems.

For the determination of whether a target region corresponds to the "extension portion" described in the requirement (I) or not, it can be determined by whether a terminal can be connected to the target region or not. For example, whether an alligator clip terminal having a length of 31 mm and a diameter of 3 mm can be connected to a target region or not is checked, and when the alligator clip terminal can be connected, the target region may be determined as the "extension portion".

Even in such a configuration that in the electrically conductive substrate, a region protruding slightly more than the first pressure-sensitive adhesive layer and the second pressure-sensitive adhesive layer in the transverse direction x or the longitudinal direction y is present because of manufacturing problems, the length of the region protruding in the transverse direction x or the longitudinal direction y is preferably shorter.

The length of the region protruding in the transverse direction x or the longitudinal direction y should be such a length that the alligator clip terminal cannot be connected, and is preferably less than 5 mm, more preferably less than 2 mm, further preferably less than 1 mm, still further preferably less than 100 µm, and particularly preferably less than 10 µm.

The pressure-sensitive adhesive sheet of the present invention has a configuration in which at least part of the intermediate layer includes an electrically conductive pressure-sensitive adhesive layer, as defined by the requirement (II).

For example, the pressure-sensitive adhesive sheet 1a shown in Figure 1 has a configuration in which the intermediate layer 12 includes an electrically conductive pressure-sensitive adhesive layer 121, and one surface of the electrically conductive pressure-sensitive adhesive layer 121 is in contact with the entire surface of one surface of the electrically conductive layer 13 and has no non-contact part with the electrically conductive layer 13.

When the first pressure-sensitive adhesive layer of the pressure-sensitive adhesive sheet 1a shown in Figure 1 is affixed to an electrically conductive adherend, and then the pressure-sensitive adhesive sheet is peeled from the electrically conductive adherend, the tack of the first pressure-sensitive adhesive layer to the electrically conductive adherend can be decreased by putting one terminal into the interior of the electrically conductive pressure-sensitive adhesive layer 121, electrically connecting the other terminal to the electrically conductive adherend, and applying a voltage to both terminals. As a result, the pressure-sensitive adhesive sheet can be peeled from the electrically conductive adherend.

As a different configuration from the pressure-sensitive adhesive sheet 1a shown in Figure 1, in a pressure-sensitive adhesive sheet in one aspect of the present invention, the electrically conductive pressure-sensitive adhesive layer constituting at least part of the intermediate layer may be a patterned layer having a contact part and a non-contact part with the electrically conductive layer. The pressure-sensitive adhesive sheets 1b to 1d and 2a to 2b shown in Figures 2 to 6 each show one example of the configuration of such a pressure-sensitive adhesive sheet.

Like the pressure-sensitive adhesive sheets 1b to 1d shown in Figures 2 to 4, the pressure-sensitive adhesive sheet in one aspect of the present invention may have a configuration in which it has at least one terminal connection portion into which a terminal can be inserted, at an end of the intermediate layer, or the at least one terminal connection portion can be formed at an end of the intermediate layer.

By providing a pressure-sensitive adhesive sheet having a terminal connection portion, the operation of putting a terminal via the terminal connection portion into the interior of the electrically conductive pressure-sensitive adhesive layer constituting at least part of the intermediate layer is easier. In addition, in the terminal connection portion, the terminal is in a state of being sandwiched between the layers above the support of the pressure-sensitive adhesive sheet and the layers below the electrically conductive layer, and therefore the terminal can also be fixed.

In Figures 2 to 4, at least one terminal connection portion X into which a terminal can be inserted is already formed at an end of the intermediate layer 12, showing one example of the configuration of a pressure-sensitive adhesive sheet having the terminal connection portion. As shown in Figures 2 to 4, in the intermediate layer 12, the affixed surface of the electrically conductive pressure-sensitive adhesive layer 121 is affixed to and in contact with the electrically conductive layer 13 in a contact part 12a, and the terminal connection portion X includes a space including the non-contact part 12b of the intermediate layer 12 with the electrically conductive layer 13.

The pressure-sensitive adhesive sheets 1b, 1c, and 1d shown in Figures 2 to 4 have such a configuration, and therefore while the pressure-sensitive adhesive sheets 1b, 1c, and 1d have the terminal connection portion X, the electrically conductive pressure-sensitive adhesive layer 121 and the electrically conductive layer 13 adhere closely to each other in the contact part 12a. Therefore, it is possible to make the interlayer close adhesiveness of the electrically conductive substrate 10 good and ensure stable conductivity.

When the pressure-sensitive adhesive sheet in one aspect of the present invention has a terminal connection portion, the terminal connection portion may be provided at an arbitrary position at an end of the intermediate layer.

For example, the pressure-sensitive adhesive sheet 1b shown in Figure 2 has the terminal connection portion X at the right end of the intermediate layer 12. When the pressure-sensitive adhesive sheet 1b is peeled from an adherend, a terminal can be inserted into the terminal connection portion X provided at the right end of the intermediate layer to put the terminal into the interior of the electrically conductive pressure-sensitive adhesive layer 121.

When the pressure-sensitive adhesive sheet in one aspect of the present invention has a terminal connection portion, the position at which the terminal connection portion is provided and the number of terminal connection portions are not particularly limited and can be appropriately set according to the application.

The pressure-sensitive adhesive sheet 1c shown in Figure 3 has a configuration in which the terminal connection portion X is provided along the outer edges of the intermediate layer 12 so as to include all the ends of the intermediate layer 12. In the pressure-sensitive adhesive sheet 1c, the terminal connection portion X is provided at all ends of the intermediate layer 12, and therefore a terminal can be inserted from an end at an arbitrary position to put the terminal into the interior of the electrically conductive pressure-sensitive adhesive layer 121. In addition, the contact part 12a between the electrically conductive pressure-sensitive adhesive layer 121 and the electrically conductive layer 13 is inside the pressure-sensitive adhesive sheet, and therefore it is possible to make the interlayer close adhesiveness of the electrically conductive substrate 10 also good and ensure stable conductivity.

Like the pressure-sensitive adhesive sheet 1d shown in Figure 4, the intermediate layer 12 may have such a configuration that the contact parts 12a and the non-contact parts 12b with the electrically conductive layer 13 are alternately present in a predetermined repeated pattern. In the case of the configuration like the pressure-sensitive adhesive sheet 1d, the electrically conductive pressure-sensitive adhesive layer 121 adheres closely to the electrically conductive layer 13 in the contact parts 12a in part of the ends of the intermediate layer 12, and a plurality of the contact parts 12a are present, and therefore it is possible to make the interlayer close adhesiveness of the electrically conductive substrate 10 at the ends also good and ensure stable conductivity. In addition, the pressure-sensitive adhesive sheet 1d has a plurality of the terminal connection portions X in part of the ends of the intermediate layer 12, and therefore it is possible to relatively freely select a position at which a terminal is to be inserted and insert a terminal from the selected position to put the terminal into the interior of the electrically conductive pressure-sensitive adhesive layer 121.

The pressure-sensitive adhesive sheet may have a configuration in which at least one terminal connection portion into which a terminal can be inserted can be formed at an end of the intermediate layer.

The "configuration in which a terminal connection portion can be formed" herein means a configuration in which the pressure-sensitive adhesive sheet has no terminal connection portion before an external force is applied, but a terminal connection portion can be formed in the intermediate layer 12 by applying such an external force as to cause peeling between the electrically conductive layer 13 and the intermediate layer 12.

Figures 5 to 6 each show one example of a pressure-sensitive adhesive sheet in which at least part of the ends of the intermediate layer have a configuration in which a terminal connection portion can be formed. In the pressure-sensitive adhesive sheet in this aspect, a configuration in which a terminal connection portion can be formed in part of the intermediate layer by applying such an external force as to cause peeling between the electrically conductive layer 13 and the intermediate layer 12 is preferred.

In order to provide such an intermediate layer in which a terminal connection portion can be formed, at least part of the intermediate layer of the pressure-sensitive adhesive sheet in one aspect of the present invention may include a pseudo-adhesive layer having a contact part with the electrically conductive layer. In the case of such a configuration, by applying such an external force as to cause peeling at least in part between the electrically conductive layer and the pseudo-adhesive layer, at least part of the contact part of the pseudo-adhesive layer with the electrically conductive layer peels from the surface of the electrically conductive layer, and a terminal connection portion is formed.

The pseudo-adhesive layer preferably has the property of being weakly adhered to the extent that delamination can occur by a slight force but not adhering again after once the state of adhering weakly is released to peel the pseudo-adhesive layer.

When the pseudo-adhesive layer has such a property, the pseudo-adhesive layer is weakly adhered to the electrically conductive layer, and the interlayer close adhesiveness of the pressure-sensitive adhesive sheet is kept good, when the pressure-sensitive adhesive sheet having a configuration in which part of the intermediate layer includes the pseudo-adhesive layer is affixed to an adherend. Then, when the pressure-sensitive adhesive sheet is peeled from the adherend, first, peeling is caused between the pseudo-adhesive layer and the electrically conductive layer, and thus a space including a non-contact part with the electrically conductive layer can occur to form a terminal connection portion.

The pressure-sensitive adhesive sheet 2a shown in Figure 5 has a configuration in which the intermediate layer 12 includes the electrically conductive pressure-sensitive adhesive layer 121 and a pseudo-adhesive layer 122. The pseudo-adhesive layer 122 is present at at least part of the ends of the intermediate layer. The electrically conductive pressure-sensitive adhesive layer 121 constituting part of the intermediate layer 12 is affixed to the electrically conductive layer 13, and therefore the interlayer close adhesiveness of the electrically conductive substrate 10 is good, and stable conductivity can be ensured. In addition, the pseudo-adhesive layer 122 also pseudo-adheres to the electrically conductive layer 13, and therefore the electrically conductive substrate 10 has good interlayer close adhesiveness even at the ends before a terminal connection portion is formed.

When a terminal connection portion is formed, the terminal connection portion can be formed in the intermediate layer 12 by applying an external force to cause peeling at at least part of the interface L between the electrically conductive layer 13 and the pseudo-adhesive layer 122. In the pressure-sensitive adhesive sheet 2a, even after the terminal connection portion is formed, the electrically conductive pressure-sensitive adhesive layer 121 adheres closely to the electrically conductive layer 13, and therefore the interlayer close adhesiveness of the electrically conductive substrate 10 can be kept good, and stable conductivity can be ensured.

The intermediate layer 12 of the pressure-sensitive adhesive sheet 2b shown in Figure 6 has a configuration in which the pseudo-adhesive layer 122 is provided along the outer edges of the intermediate layer 12 so as to include all the ends, and the electrically conductive pressure-sensitive adhesive layer 121 is provided in the interior of the intermediate layer 12. In the pressure-sensitive adhesive sheet 2b, at all ends of the intermediate layer 12, a terminal connection portion can be formed at the desired position in the intermediate layer 12 by applying an external force to cause peeling at at least part of the interface L between the electrically conductive layer 13 and the pseudo-adhesive layer 122.

In the pressure-sensitive adhesive sheet 2b, a terminal connection portion can be formed when peeling occurs at part of the interface L between the electrically conductive layer 13 and the pseudo-adhesive layer 122, and it is not necessary to peel all the interface L. Therefore, even after the terminal connection portion is formed, the pseudo-adhesive layer 122 in parts other than the part in which the terminal connection portion is formed is pseudo-adhered to the electrically conductive layer 13, and therefore the interlayer close adhesiveness of the ends of the electrically conductive substrate 10 can be kept good.

In the pressure-sensitive adhesive sheet in one aspect of the present invention, the proportion of the area occupied by the electrically conductive pressure-sensitive adhesive layer to the total area 100% of the intermediate layer when the intermediate layer is seen in a planar view may be 5% or more, 10% or more, 15% or more, 20% or more, 25% or more, 30% or more, 35% or more, 40% or more, 45% or more, 50% or more, 55% or more, 60% or more, 65% or more, or 70% or more and 100% or less, 95% or less, 90% or less, 85% or less, 80% or less, 75% or less, 70% or less, 65% or less, 60% or less, or 55% or less.

In the pressure-sensitive adhesive sheets in which a terminal connection portion can be formed, like the pressure-sensitive adhesive sheets 2a to 2b in Figures 5 to 6, the proportion of the area occupied by the pseudo-adhesive layer to the total area 100% of the intermediate layer when the intermediate layer is seen in a planar view may be 0.1% or more, 0.2% or more, 0.3% or more, 0.4% or more, 0.5% or more, 1.0% or more, 2.0% or more, 3.0% or more, 4.0% or more, 5.0% or more, 6.0% or more, 7.0% or more, or 8.0% or more and 80% or less, 70% or less, 65% or less, 60% or less, 55% or less, 50% or less, 45% or less, 40% or less, 35% or less, or 30% or less.

In one aspect of the present invention, the ratio of the thickness of the electrically conductive layer to the thickness of the intermediate layer [electrically conductive layer/intermediate layer] is preferably 1/99 to 99/1, more preferably 3/97 to 97/3, further preferably 5/95 to 95/5, still further preferably 7/93 to 90/10, and particularly preferably 10/90 to 85/15.

In one aspect of the present invention, the ratio of the thickness of the intermediate layer to the thickness of the support [intermediate layer/support] is preferably 5/95 to 95/5, more preferably 6/94 to 94/6, further preferably 7/93 to 93/7, still further preferably 8/92 to 92/8, and particularly preferably 10/90 to 90/10.

The thickness of the electrically conductive substrate is preferably 5 to 1000 µm, more preferably 10 to 500 µm, further preferably 15 to 300 µm, still further preferably 17 to 200 µm, and particularly preferably 20 to 150 µm.

The layers constituting the pressure-sensitive adhesive sheet will be described below.

### <Support>

The support of the pressure-sensitive adhesive sheet has a function for providing self-supporting properties and insulating properties to the pressure-sensitive adhesive sheet to provide a pressure-sensitive adhesive sheet easy to handle.

Examples of the support used in one aspect of the present invention include a resin substrate, a fiber substrate, a paper substrate, and a foam substrate.

Examples of the resin constituting the resin substrate include polyester-based resins such as polyethylene terephthalate, polybutylene terephthalate, and polyethylene naphthalate; polyolefin resins such as polyethylene and polypropylene; vinyl-based resins such as polyvinyl chloride, polyvinylidene chloride, polyvinyl alcohol, ethylene-vinyl acetate copolymers, and ethylene-vinyl alcohol copolymers; polystyrene; acrylonitrile-butadiene-styrene copolymers; cellulose triacetate; polycarbonates; urethane resins such as polyurethanes and acrylic-modified polyurethanes; polymethylpentene; polysulfones; polyetheretherketone; polyethersulfone; polyphenylene sulfide; polyimide-based resins such as polyetherimide and polyimides; polyamide-based resins; acrylic resins; and fluorine-based resins.

These resins may be used singly, or two or more of these resins may be used together.

The resin substrate may contain various additives such as an ultraviolet absorbing agent, a light stabilizer, an antioxidant, an antistatic agent, a slip agent, an antiblocking agent, and a colorant, together with the resin described above.

The resin substrate may be unstretched or stretched in a uniaxial direction such as the longitudinal direction or the transverse direction or in biaxial directions.

The resin substrate may be a resin film having a cavity-containing layer including a cavity in the interior. A resin substrate in which a resin layer including no cavity is further laminated on at least one surface side of the cavity-containing layer may be provided.

Examples of the fibers constituting the fiber substrate include natural fibers such as natural pulp fibers and linter pulp; inorganic fibers such as glass fibers; carbon fibers such as polyacrylonitrile (PAN)-based carbon fibers and pitch-based carbon fibers; and chemical fibers such as aramid fibers and phenol fibers. The form of the fiber substrate may be a nonwoven fabric or a woven fabric.

Examples of the paper material constituting the paper substrate include tissue paper, medium quality paper, high quality paper, impregnated paper, coated paper, art paper, parchment paper, and glassine paper.

The foam substrate preferably includes various resins, and examples of the resins include polyolefin-based resins such as polyethylene, polypropylene, ethylene-propylene copolymers, and ethylene-vinyl acetate copolymers; polyurethane-based resins; and rubber-based resins such as acrylic rubbers and other elastomers.

The support may be a single-layer substrate or a multilayer substrate obtained by laminating two or more layers.

Examples of the multilayer substrate include a laminated resin film obtained by laminating two or more resin films, and a laminate substrate obtained by laminating a paper substrate with a thermoplastic resin such as polyethylene.

When the support is a resin substrate or a laminate substrate, surface treatment such as an oxidation method or a roughening method, or primer treatment may be performed on the surfaces of these substrates.

The oxidation method is not particularly limited, and examples thereof include a corona discharge treatment method, a plasma treatment method, chromic acid oxidation (wet), flame treatment, hot air treatment, and ozone-ultraviolet irradiation treatment.

The roughening method is not particularly limited, and examples thereof include a sandblasting method and a solvent treatment method.

The thickness of the support is appropriately set according to the application of the pressure-sensitive adhesive sheet and may be, for example, 1 µm or more, 3 µm or more, 5 µm or more, 7 µm or more, 10 µm or more, 20 µm or more, 30 µm or more, 40 µm or more, or 50 µm or more and 2000 µm or less, 1000 µm or less, 500 µm or less, 300 µm or less, 150 µm or less, or 100 µm or less.

### <Electrically Conductive Layer>

The electrically conductive layer of the pressure-sensitive adhesive sheet is a layer having the function of passing a current from an externally inserted terminal to the first pressure-sensitive adhesive layer to decrease the tack of the first pressure-sensitive adhesive layer.

The electrically conductive layer of the pressure-sensitive adhesive sheet should be formed of an electrically conductive material and is preferably a layer formed of a metal material.

Examples of the metal material forming the electrically conductive layer include simple substance metals such as aluminum, copper, tungsten, iron, molybdenum, nickel, titanium, silver, gold, and platinum; alloys such as steels such as stainless steel and carbon steel, brass, phosphor bronze, zirconium copper alloys, beryllium copper, iron nickel, nichrome, nickel titanium, Kanthal, HASTELLOY, and rhenium tungsten; and tin-doped indium oxide.

The electrically conductive layer may be a layer formed of an electrically conductive polymer.

The thickness of the electrically conductive layer is appropriately set according to the application of the pressure-sensitive adhesive sheet and may be, for example, 1 µm or more, 5 µm or more, 10 µm or more, 20 µm or more, 30 µm or more, 40 µm or more, 50 µm or more, or 60 µm or more and 1000 µm or less, 700 µm or less, 500 µm or less, 300 µm or less, 200 µm or less, 150 µm or less, or 100 µm or less.

### <Intermediate Layer>

The intermediate layer of the pressure-sensitive adhesive sheet should include an electrically conductive pressure-sensitive adhesive layer at least in part and may further include a pseudo-adhesive layer. The intermediate layer may include an electrically non-conductive pressure-sensitive adhesive layer and an adhesive layer.

The thickness of the intermediate layer is appropriately set according to the application of the pressure-sensitive adhesive sheet and may be, for example, 1 µm or more, 2 µm or more, 5 µm or more, 7 µm or more, 10 µm or more, 20 µm or more, 30 µm or more, or 40 µm or more and 700 µm or less, 500 µm or less, 300 µm or less, 200 µm or less, 150 µm or less, or 100 µm or less.

The electrically conductive pressure-sensitive adhesive layer constituting the intermediate layer can be formed of the following electrically conductive pressure-sensitive adhesive composition (xα), and the electrically non-conductive pressure-sensitive adhesive layer can be formed of the following pressure-sensitive adhesive composition (x). The electrically conductive pressure-sensitive adhesive composition (xα) can be prepared by blending an electrically conductive filler into the pressure-sensitive adhesive composition (x).

The adhesive layer constituting the intermediate layer can be formed of the following adhesive composition (w). The pseudo-adhesive layer constituting the intermediate layer can be formed of the following pseudo-adhesive composition (z).

The pressure-sensitive adhesive composition (x), the electrically conductive pressure-sensitive adhesive composition (xα), the adhesive composition (w), and the pseudo-adhesive composition (z) will be described below.

### (Pressure-Sensitive Adhesive Composition (x))

When at least part of the intermediate layer includes a pressure-sensitive adhesive layer, the pressure-sensitive adhesive layer is electrically non-peelable and can be formed of an electrically non-conductive pressure-sensitive adhesive composition (x).

The pressure-sensitive adhesive composition (x) includes at least an adhesive resin and may further contain various additives according to the type of the adhesive resin and the properties required of the formed pressure-sensitive adhesive layer.

The electrically conductive pressure-sensitive adhesive composition (xα) described later can be prepared by further blending an electrically conductive filler into the pressure-sensitive adhesive composition (x). The electrically peelable pressure-sensitive adhesive composition (y) described later can be prepared by further blending an ionic compound into the pressure-sensitive adhesive composition (x).

The adhesive resin used in one aspect of the present invention should be a resin having adhesive, and examples of the adhesive resin include acrylic polymers, urethane-based polymers, rubber-based polymers, polyester-based polymers, olefin-based polymers, silicone-based polymers, and curable polymers having polymerizable functional groups in these polymers.

These adhesive resins may be used singly, or two or more of these adhesive resins may be used together.

The adhesive resin used in one aspect of the present invention may be an emulsion type polymer or a non-emulsion type polymer.

The mass average molecular weight of the adhesive resin used in one aspect of the present invention is preferably 10000 to 2000000, more preferably 20000 to 1800000, further preferably 30000 to 1500000, still further preferably 40000 to 1200000, and particularly preferably 50000 to 1000000 from the viewpoint of making the tack of the formed pressure-sensitive adhesive layer good.

The content of the adhesive resin in the pressure-sensitive adhesive composition (x) is preferably 30% by mass or more, more preferably 50% by mass or more, further preferably 60% by mass or more, still further preferably 70% by mass or more, and particularly preferably 80% by mass or more and may be 100% by mass or less, 99% by mass or less, 97% by mass or less, or 95% by mass or less based on the total amount (100% by mass) of the active components of the pressure-sensitive adhesive composition (x).

Examples of the various additives included in the pressure-sensitive adhesive composition (x) include a crosslinking agent, a tackifier, a compatibilizer, a wetting agent, a thickening agent, an antifoaming agent, an antioxidant, an ultraviolet absorbing agent, a softening agent (plasticizer), a filling agent, a rust preventive, a pigment, and a dye.

As these other additives, additives used in general pressure-sensitive adhesive compositions can be used.

Each additive may be used singly, or two or more of each additive may be used together.

The amount of each of these various additives blended is appropriately set according to the type of the additive but is preferably 0.01 to 50 parts by mass, more preferably 0.05 to 40 parts by mass, and further preferably 0.1 to 30 parts by mass based on the total amount 100 parts by mass of the adhesive resin included in the pressure-sensitive adhesive composition (x).

The electrically non-peelable pressure-sensitive adhesive layer can be formed by applying the pressure-sensitive adhesive composition (x) on a surface of another layer to form a coating film, and drying the coating film.

Here, from the viewpoint of easily applying the pressure-sensitive adhesive composition (x) on a surface of another layer and improving operability, the pressure-sensitive adhesive composition (x) may be further diluted with water or an organic solvent and be in the form of a solution.

Examples of the organic solvent include methyl ethyl ketone, acetone, ethyl acetate, tetrahydrofuran, dioxane, cyclohexane, n-hexane, toluene, xylene, n-propanol, and isopropanol.

For these organic solvents, the organic solvent used during the synthesis of the adhesive resin may be used as it is, or one or more organic solvents other than the organic solvent used during the synthesis of the adhesive resin may be added.

### (Electrically Conductive Pressure-Sensitive Adhesive Composition (xα))

The electrically conductive pressure-sensitive adhesive layer constituting at least part of the intermediate layer can be prepared by being formed of the electrically conductive pressure-sensitive adhesive composition (xα) obtained by blending an electrically conductive filler into the pressure-sensitive adhesive composition (x) described above.

That is, the electrically conductive pressure-sensitive adhesive composition (xα) is a composition including the adhesive resin described above and an electrically conductive filler and further, more preferably further includes one or more selected from an oligomer component, a tackifier, and a crosslinking agent, according to the type of the adhesive resin, and may contain other additives other than the above.

The acid value of the electrically conductive pressure-sensitive adhesive composition (xα) used in one aspect of the present invention is preferably 5.0 mg KOH/g or less, more preferably 3.0 mg KOH/g or less, further preferably 1.0 mg KOH/g or less, still further preferably 0.5 mg KOH/g or less, and particularly preferably 0.1 mg KOH/g or less from the viewpoint of providing a pressure-sensitive adhesive sheet in which the oxidative degradation of the electrically conductive layer is suppressed, and the electrical peelability is kept good even over time.

### [Adhesive resin]

Examples of the adhesive resin included in the electrically conductive pressure-sensitive adhesive composition (xα) include the same as the adhesive resin included in the pressure-sensitive adhesive composition (x). They may be used singly, or two or more of them may be used together.

The mass average molecular weight (Mw) of the adhesive resin is preferably 10000 to 2000000, more preferably 20000 to 1500000, and further preferably 30000 to 1000000.

The content of the adhesive resin is preferably 30 to 99.99% by mass, more preferably 40 to 99.95% by mass, more preferably 50 to 99.90% by mass, further preferably 60 to 99.80% by mass, and still further preferably 70 to 99.50% by mass based on the total amount (100% by mass) of the active components of the electrically conductive pressure-sensitive adhesive composition (xα).

### Component (P): Acrylic Polymer

The adhesive resin included in the electrically conductive pressure-sensitive adhesive composition (xα) preferably includes at least an acrylic polymer (P).

The content of the acrylic polymer (P) in the adhesive resin is preferably 30 to 100% by mass, more preferably 50 to 100% by mass, further preferably 70 to 100% by mass, and still further preferably 85 to 100% by mass based on the total amount (100% by mass) of the adhesive resin included in the electrically conductive tacky composition (xα).

The acrylic polymer (P) is preferably an acrylic copolymer having a constituent unit (p1) derived from an alkyl (meth)acrylate (p1') (hereinafter also referred to as a "monomer (p1')") and a constituent unit (p2) derived from (meth)acryloylmorpholine (hereinafter also referred to as a "monomer (p2')"), more preferably an acrylic copolymer further including a constituent unit (p3) derived from a functional group-containing monomer (p3') (hereinafter also referred to as a "monomer (p3')"), together with the constituent units (p1) and (p2).

The monomers (p1') to (p3') may be used singly or in combination of two or more. The acrylic polymer (P) may have constituent units derived from other monomers other than the constituent units (p1) to (p3).

Examples of the monomer (p1') include methyl (meth)acrylate, ethyl (meth)acrylate, propyl (meth)acrylate, butyl (meth)acrylate, 2-ethylhexyl (meth)acrylate, lauryl (meth)acrylate, tridecyl (meth)acrylate, and stearyl (meth)acrylate, and butyl (meth)acrylate and 2-ethylhexyl (meth)acrylate are preferred, and butyl (meth)acrylate is more preferred.

The content of the constituent unit (p1) is preferably 50 to 99.5% by mass, more preferably 60 to 99% by mass, further preferably 70 to 97% by mass, and still further preferably 80 to 95% by mass based on the total amount (100% by mass) of the constituent units of the acrylic polymer (P).

As a monomer (p2'), acryloylmorpholine is preferred.

The content of a constituent unit (p2) is preferably 0.5 to 35% by mass, more preferably 1.0 to 30% by mass, further preferably 3.0 to 25% by mass, and still further preferably 5.0 to 20% by mass based on the total amount (100% by mass) of the constituent units of the acrylic polymer (P).

Examples of a monomer (p3') include hydroxy group-containing monomers, epoxy group-containing monomers, amino group-containing monomers, cyano group-containing monomers, and keto group-containing monomers.

In the present invention, (meth)acryloylmorpholine corresponds to the monomer (p2) and is excluded from the monomer (p3').

The content of a constituent unit (p3) is preferably 0.1 to 30% by mass, more preferably 0.2 to 20% by mass, further preferably 0.3 to 10% by mass, and still further preferably 0.5 to 5% by mass based on the total amount (100% by mass) of the constituent units of the acrylic polymer (P).

In the acrylic polymer (P) used in one aspect of the present invention, the content of a constituent unit derived from a carboxy group-containing monomer is preferably as low as possible, and more preferably no constituent unit derived from a carboxy group-containing monomer is contained.

The content of the constituent unit derived from a carboxy group-containing monomer is preferably 2.0% by mass or less, more preferably 1.0% by mass or less, further preferably 0.1% by mass or less, and still further preferably 0.0% by mass based on the total amount (100% by mass) of the constituent units of the acrylic polymer (P).

### [Electrically Conductive Filler]

Examples of the electrically conductive filler used in one aspect of the present invention include metal-based fillers such as silver, copper, aluminum, nickel, tin, and zinc; metal oxide-based fillers such as zinc oxide-, titanium oxide-, tin oxide-, indium oxide-, and antimony oxide-based fillers; and carbon-based fillers.

These electrically conductive fillers may be used singly, or two or more of these electrically conductive fillers may be used together.

The average particle diameter (average major axis) of the electrically conductive filler is preferably 0.01 to 2000 µm, more preferably 0.05 to 1000 µm, further preferably 0.07 to 500 µm, and still further preferably 0.1 to 100 µm.

The content of the electrically conductive filler is preferably 0.01 to 20 parts by mass, more preferably 0.05 to 15 parts by mass, more preferably 0.1 to 10 parts by mass, further preferably 0.3 to 7 parts by mass, still further preferably 0.5 to 4.5 parts by mass, and particularly preferably 0.7 to 3.8 parts by mass based on the total amount 100 parts by mass of the adhesive resin included in the electrically conductive tacky composition (xα).

The content of the carbon-based filler in the electrically conductive tacky composition (xα)is preferably 0.01 to 20% by mass, more preferably 0.05 to 10% by mass, further preferably 0.10 to 7% by mass, still further preferably 0.20 to 5% by mass, and particularly preferably 0.30 to 3.5% by mass based on the total amount (100% by mass) of the active components of the electrically conductive tacky composition (xα).

### Component (Q): Carbon-Based Filler

The electrically conductive filler used in one aspect of the present invention preferably includes a carbon-based filler (Q).

The content of the carbon-based filler (Q) is preferably 50 to 100% by mass, more preferably 70 to 100% by mass, further preferably 80 to 100% by mass, still further preferably 90 to 100% by mass, and particularly preferably 95 to 100% by mass based on the total amount (100% by mass) of the electrically conductive filler included in the electrically conductive tacky composition (xα).

Examples of the carbon-based filler (Q) include electrically conductive fillers including carbon atoms. Specific examples include carbon nanomaterials, carbon black, milled carbon fibers, and graphite, and carbon nanomaterials are preferred.

A carbon nanomaterial includes a substance including a graphite sheet having a six-membered ring arrangement structure as the main structure and may contain atoms other than a carbon atom, such as a boron atom and a nitrogen atom, in the graphite structure and may be in a form in which the carbon nanomaterial contains other substances and further in a form in which the carbon nanomaterial is modified with other electrically conductive substances.

Examples of specific carbon nanomaterials include carbon nanotubes (CNTs), carbon nanofibers, carbon nanohorns, carbon nanocones, and fullerenes, and carbon nanotubes are preferred.

A carbon nanotube is a tubular carbon polyhedron having a structure in which a graphite (graphite) sheet having a carbon six-membered ring structure as the main structure is cylindrically closed.

Carbon nanotubes include a single-walled carbon nanotube having a structure in which one layer of a graphite sheet is cylindrically closed, a double-walled carbon nanotube having a structure in which two layers of graphite sheets are cylindrically closed, and a multi-walled carbon nanotube having a multilayer structure in which three or more layers of graphite sheets are concentrically tubularly closed. Any two or more of these can also be used together.

The average aspect ratio of the carbon-based filler (Q) used in one aspect of the present invention is preferably 3.0 or more, more preferably 5.0 or more, more preferably 10 or more, further preferably 50 or more, still further preferably 100 or more, and particularly preferably 130 or more and preferably 10000 or less, more preferably 2000 or less, further preferably 1000 or less, and still further preferably 400 or less.

As used herein, "the aspect ratio of a carbon-based filler" is a value calculated from the proportion of the length of the long side (H) to the length of the short side (L) [(H)/(L)] of a target carbon-based filler.

The length of the long side (H) of the carbon-based filler means the length of the target carbon-based filler in the long direction, and in actual measurement, the distance between the farthest two points of the target carbon-based filler may be taken as "the length of the long side (H)".

On the other hand, the length of the short side (L) of the carbon-based filler is a diameter or a major axis when the section when the carbon-based filler is cut perpendicularly to the tangential direction at any point of the target carbon-based filler is a circle or an ellipse. The length of the short side (L) of the carbon-based filler means the diameter of the circumcircle of a polygon when the section is a polygon.

The average of the length of the long side (H) of the carbon-based filler (Q) used in one aspect of the present invention is preferably 0.01 to 2000 µm, more preferably 0.1 to 1000 µm, further preferably 0.3 to 500 µm, and still further preferably 0.5 to 100 µm.

The average of the length of the short side (L) of the carbon-based filler (Q) used in one aspect of the present invention is preferably 1 to 1000 nm, more preferably 2 to 750 nm, more preferably 3 to 500 nm, further preferably 5 to 100 nm, and still further preferably 7 to 50 nm.

In the invention, "the lengths of the long sides (H)", "the lengths of the short sides (L)", and "the aspect ratios" of 10 arbitrarily selected carbon-based filler particles are each measured, and the average values of these can also be regarded as "the average of the lengths of the long sides (H)", "the average of the lengths of the short sides (L)", and the "average aspect ratio" respectively.

The shape of the carbon-based filler (Q) used in one aspect of the present invention is not particularly limited as long as it is such a shape that the carbon-based filler can be uniformly dispersed in the pressure-sensitive adhesive layer. A columnar shape, a tubular shape, a spindle shape, a fibrous shape, and a shape in which these are combined are preferred, and a columnar shape, a tubular shape, a fibrous shape, and a shape in which these are combined are more preferred.

From the viewpoint, the carbon-based filler (Q) used in one aspect of the present invention is preferably a carbon-based filler having a shape formed of a fibrous material obtained by the entanglement of a plurality of single yarns, like wool, more preferably a tubular carbon-based filler formed of a fibrous material obtained by the entanglement of a plurality of single yarns.

### [Oligomer Component]

The oligomer component included in the electrically conductive pressure-sensitive adhesive composition (xα) used in one aspect of the present invention is an oligomer having a mass average molecular weight of less than 10000, added for the purpose of improving the flexibility and compatibility of the adhesive resin.

The mass average molecular weight of the oligomer component is preferably less than 10000, more preferably 1000 to 8000, and further preferably 5000 to 7000.

The oligomer component is appropriately selected according to the type of the adhesive resin, and examples of the oligomer component include acrylic oligomers, urethane-based oligomers, polyisobutylene-based oligomers, polyester-based oligomers, and polyolefin-based oligomers.

These oligomer components may be used singly, or two or more of these oligomer components may be used together.

In one aspect of the present invention, the same type (kind) of oligomer as the adhesive resin is preferably included.

The content of the oligomer component is preferably 0.5 to 40 parts by mass, more preferably 1.0 to 30 parts by mass, more preferably 1.5 to 20 parts by mass, further preferably 2.0 to 10 parts by mass, and still further preferably 2.5 to 7.5 parts by mass based on 100 parts by mass of the adhesive resin included in the electrically conductive pressure-sensitive adhesive composition (xα).

### [Tackifier]

The electrically conductive pressure-sensitive adhesive composition (xα) used in one aspect of the present invention may further contain a tackifier.

Examples of the tackifier include rosin-based resins such as rosin resins, rosin phenol resins, and ester compounds thereof; hydrogenated rosin-based resins obtained by hydrogenating these rosin-based resins; terpene-based resins such as terpene-based resins, terpene phenol-based resins, and aromatic-modified terpene-based resins; hydrogenated terpene-based resins obtained by hydrogenating these terpene-based resins; C5-based petroleum resins obtained by copolymerizing C5 fractions such as pentene, isoprene, piperine, and 1.3-pentadiene produced by the thermal cracking of petroleum naphtha, and hydrogenated petroleum resins of these C5-based petroleum resins; and C9-based petroleum resins obtained by copolymerizing C9 fractions such as indene, vinyltoluene, α-methylstyrene, and β-methylstyrene produced by the thermal cracking of petroleum naphtha, and hydrogenated petroleum resins of these C9-based petroleum resins.

These tackifiers may be used singly, or two or more of these tackifiers may be used together.

The softening point of the tackifier is preferably 60 to 170°C, more preferably 75 to 150°C, further preferably 85 to 140°C, and still further preferably 90 to 135°C from the viewpoint of the improvement of tack.

The value of the softening point of the tackifier is a value measured in accordance with JIS K 2531.

The content of the tackifier is preferably 1 to 50 parts by mass, more preferably 1.5 to 40 parts by mass, further preferably 2 to 30 parts by mass, and still further preferably 3 to 20 parts by mass based on 100 parts by mass of the adhesive resin included in the electrically conductive pressure-sensitive adhesive composition (xα).

### [Crosslinking Agent]

The electrically conductive pressure-sensitive adhesive composition (xα) used in one aspect of the present invention may further contain a crosslinking agent. Particularly, when the adhesive resin includes the acrylic polymer (P) described above, the electrically conductive pressure-sensitive adhesive composition (xα) preferably contains a crosslinking agent from the viewpoint of improving the tack of the formed electrically conductive pressure-sensitive adhesive layer.

Examples of the crosslinking agent include isocyanate-based crosslinking agents, epoxy-based crosslinking agents, aziridine-based crosslinking agents, and chelate-based crosslinking agents, and these may be used singly, or two or more of these may be used together.

The content of the crosslinking agent is preferably 0.01 to 15 parts by mass, more preferably 0.05 to 10 parts by mass, further preferably 0.1 to 7.0 parts by mass, and still further preferably 0.2 to 4.0 parts by mass based on 100 parts by mass of the adhesive resin included in the electrically conductive pressure-sensitive adhesive composition (xα).

### [Other Additives]

The electrically conductive pressure-sensitive adhesive composition (xα) used in one aspect of the present invention may further contain other additives in a range that does not impair the effects of the present invention.

Examples of other additives include an antioxidant, an ultraviolet absorbing agent, a curing accelerator (catalyst), a light stabilizer, a resin stabilizer, a filling agent, a pigment, an extender, an infrared absorbing agent, a near-infrared absorbing agent, a preservative-fungicide, a rust preventive, a plasticizer, and a high boiling point solvent.

These additives may be used singly or in combination of two or more.

### (Adhesive Composition (w))

When at least part of the intermediate layer includes an adhesive layer, the adhesive layer can be formed of the adhesive composition (w) containing a polymer component, and various additives as needed.

Examples of the polymer component include acrylic resins, polyester-based resins, urethane-based resins, acrylic urethane-based resins, silicone-based resins, rubber-based resins, phenoxy-based resins, and thermosetting polyimides.

These polymer components may be used singly, or two or more of these polymer components may be used together.

Examples of the various additives include a filling material. The filling material may be either of an organic filling material and an inorganic filling material but is preferably an inorganic filling material.

Examples of the inorganic filling material include powders such as silica, alumina, talc, calcium carbonate, titanium white, red oxide, silicon carbide, and boron nitride; beads obtained by forming these inorganic filling materials into a spherical shape; surface-modified products of these inorganic filling materials; single crystal fibers of these inorganic filling materials; and glass fibers.

### (Pseudo-Adhesive Composition (z))

When at least part of the intermediate layer includes a pseudo-adhesive layer, the pseudo-adhesive layer can be formed of the pseudo-adhesive composition (z).

The pseudo-adhesive composition (z) is preferably a composition containing an acrylic copolymer having constituent units derived from butyl (meth)acrylate, methyl (meth)acrylate, styrene, a hydroxy group-containing monomer, and a carboxy group-containing monomer, and a crosslinking agent.

Examples of the hydroxyl group-containing monomer and the carboxy group-containing monomer include the same as monomers illustrated as a hydroxy group-containing monomer and a carboxy group-containing monomer that can constitute, as a monomer (a2'), an acrylic polymer (A) included in a pressure-sensitive adhesive composition (y) described later.

The content of the constituent units derived from the monomers, based on the total amount (100% by mass) of the constituent units constituting the acrylic copolymer is preferably adjusted within the ranges shown below.
- The constituent unit derived from butyl (meth)acrylate: preferably 40 to 80% by mass, more preferably 40 to 65% by mass.
- The constituent unit derived from methyl (meth)acrylate: preferably 1 to 30% by mass, more preferably 3 to 15% by mass.
- The constituent unit derived from styrene: preferably 1 to 15% by mass, more preferably 1 to 10% by mass.
- The constituent unit derived from the hydroxy group-containing monomer: preferably 1 to 10% by mass, more preferably 1 to 5% by mass.
- The constituent unit derived from the carboxy group-containing monomer: preferably 0.1 to 1% by mass, more preferably 0.1 to 0.5% by mass.

The acrylic copolymer may have a constituent unit derived from a monomer other than the above. The copolymerization form of the acrylic copolymer is not particularly limited, and the acrylic copolymer may be any of a random copolymer, a block copolymer, and a graft copolymer.

The mass average molecular weight of the acrylic copolymer is preferably 100000 to 2000000, more preferably 200000 to 1700000, further preferably 300000 to 1500000, and particularly preferably 500000 to 1200000.

The acrylic copolymer may be used singly, or two or more of the acrylic copolymers may be used together.

As the crosslinking agent, the same one as used in the pressure-sensitive adhesive composition (x) can be used, but an isocyanate-based crosslinking agent and a chelate-based crosslinking agent are preferably included, at least an isocyanate-based crosslinking agent is more preferably included, and an isocyanate-based crosslinking agent and a chelate-based crosslinking agent are further preferably used together.

The content of the crosslinking agent in the pseudo-adhesive composition (z) is preferably 0.01 to 30 parts by mass, more preferably 0.1 to 20 parts by mass, and further preferably 0.5 to 10 parts by mass based on 100 parts by mass of the acrylic copolymer included in the pseudo-adhesive composition (z).

The pseudo-adhesive composition (z) may contain various additives such as an antioxidant, an ultraviolet absorbing agent, a light stabilizer, a softening agent, a filling agent, and a crosslinking accelerator in a range in which the object of the present invention is not impaired.

### <First Pressure-Sensitive Adhesive Layer>

The first pressure-sensitive adhesive layer of the pressure-sensitive adhesive sheet should be a pressure-sensitive adhesive layer having electrical peelability. The pressure-sensitive adhesive layer having electrical peelability means a pressure-sensitive adhesive layer whose tack decreases by voltage application.

In the pressure-sensitive adhesive sheet in one aspect of the present invention, when the pressure-sensitive adhesive sheet is affixed to an adherend, and a voltage of 10 V is applied for 60 sec, the tack decrease rate before and after the voltage application calculated from the following formula (i): [tack decrease rate (%)] = 100 - [tack of test sheet after voltage application]/[tack of test sheet before voltage application] × 100 is preferably 50% or more, more preferably 70% or more, further preferably 80% or more, still further preferably 90% or more, and particularly preferably 95% or more.

The thickness of the first pressure-sensitive adhesive layer is appropriately adjusted according to the application and the like but is preferably 0.5 to 120 µm, more preferably 1 to 100 µm, further preferably 5 to 80 µm, still further preferably 7 to 70 µm, and particularly preferably 10 to 60 µm.

The material forming the first pressure-sensitive adhesive layer should be one that can form a pressure-sensitive adhesive layer having electrical peelability, and is preferably the electrically peelable pressure-sensitive adhesive composition (y) (hereinafter also referred to as a "pressure-sensitive adhesive composition (y)") shown below.

### (Electrically Peelable Pressure-Sensitive Adhesive Composition (Y))

The pressure-sensitive adhesive composition (y) can be prepared by blending an ionic compound (B) (hereinafter also referred to as a "component (B)") described later into the pressure-sensitive adhesive composition (x) described above.

The pressure-sensitive adhesive composition (y) is preferably a composition obtained by blending an acrylic polymer (A) (hereinafter also referred to as a "component (A)") as an adhesive resin, together with the ionic compound (B).

As used herein, for example, "a composition obtained by blending the component (A) and the component (B)" means that the component (A) and the component (B) are used as the raw materials of the composition. Therefore, for example, when the component (B) is an alkali metal salt, an aspect in which the alkali metal salt ionizes to a cation and an anion in the pressure-sensitive adhesive composition, and the like are also included.

In the pressure-sensitive adhesive composition (y) used in one aspect of the present invention, from the viewpoint of providing a pressure-sensitive adhesive composition that has high tackiness before voltage application and whose tackiness can be easily decreased by voltage application, the total amount of the component (A) and the component (B) blended is preferably 60 to 100% by mass, more preferably 70 to 100% by mass, further preferably 80 to 100% by mass, still further preferably 90 to 100% by mass, and particularly preferably 95 to 100% by mass based on the total amount (100% by mass) of the active components of the pressure-sensitive adhesive composition (y).

A crosslinking agent (C) is preferably further blended or contained in the pressure-sensitive adhesive composition (y) used in one aspect of the present invention.

Various additives may be blended or contained in the pressure-sensitive adhesive composition (y) used in one aspect of the present invention, and the pressure-sensitive adhesive composition (y) may be further diluted with water or an organic solvent and be in the form of a solution.

The types and content (amount blended) of the various additives and the type of the organic solvent are the same as the description of the pressure-sensitive adhesive composition (x) described above.

### Component (A): Acrylic Polymer

The acrylic polymer (A) used in one aspect of the present invention should be an adhesive resin having a constituent unit (a1) derived from an alkyl (meth)acrylate (hereinafter also referred to as a "monomer (a1')"), and is preferably a copolymer having a constituent unit (a2) derived from a functional group-containing monomer (hereinafter also referred to as a "monomer (a2')"), together with the constituent unit (a1), from the viewpoint of providing a pressure-sensitive adhesive composition that has high tackiness before voltage application and whose tackiness can be easily decreased by voltage application.

When the acrylic polymer (A) is a copolymer, the form of copolymerization is not particularly limited, and the acrylic copolymer (A) may be any of a random copolymer, a block copolymer, and a graft copolymer.

The acrylic polymer (A) used in one aspect of the present invention may be used singly, or two or more of the acrylic polymers (A) may be used together.

The mass average molecular weight of the acrylic polymer (A) is preferably 50000 to 2000000, more preferably 100000 to 1500000, further preferably 200000 to 1200000, still further preferably 300000 to 1000000, and particularly preferably 400000 to 900000 from the viewpoint of providing a pressure-sensitive adhesive composition having high tackiness before voltage application.

The acrylic polymer (A) used in one aspect of the present invention may be a copolymer having a constituent unit (a3) derived from another monomer (hereinafter also referred to as a "monomer (a3')") other than the monomers (a1') and (a2').

In the acrylic polymer (A) used in one aspect of the present invention, the content of the constituent units (a1) and (a2) may be 55% by mass or more, 60% by mass or more, 65% by mass or more, 70% by mass or more, 75% by mass or more, 80% by mass or more, 85% by mass or more, 90% by mass or more, or 95% by mass or more and 100% by mass or less, 99% by mass or less, 95% by mass or less, 90% by mass or less, or 85% by mass or less based on the total amount (100% by mass) of the constituent units of the acrylic polymer (A).

### [Monomer (a1') and Constituent Unit (a1)]

The number of carbon atoms of the alkyl group of the monomer (a1') is preferably 1 to 30, more preferably 1 to 20, further preferably 1 to 16, still further preferably 1 to 12, and particularly preferably 4 to 8.

The alkyl group of the monomer (a1') may be a linear alkyl group or a branched alkyl group.

Specific examples of the monomer (a1') include methyl (meth)acrylate, ethyl (meth)acrylate, propyl (meth)acrylate (n-propyl (meth)acrylate and i-propyl (meth)acrylate), butyl (meth)acrylate (n-butyl (meth)acrylate, i-butyl (meth)acrylate, s-butyl (meth)acrylate, and t-butyl (meth)acrylate), pentyl (meth)acrylate, hexyl (meth)acrylate, heptyl (meth)acrylate, 2-ethylhexyl (meth)acrylate, octyl (meth)acrylate, nonyl (meth)acrylate, decyl (meth)acrylate, tridecyl (meth)acrylate, and stearyl (meth)acrylate.

These monomers (a1') may be used singly, or two or more of these monomers (a1') may be used together.

Among these, as the monomer (a1'), at least one selected from butyl (meth)acrylate, pentyl (meth)acrylate, hexyl (meth)acrylate, heptyl (meth)acrylate, and 2-ethylhexyl (meth)acrylate is preferred, butyl (meth)acrylate or 2-ethylhexyl (meth)acrylate is more preferred, and butyl (meth)acrylate is further preferred.

In the acrylic polymer (A) used in one aspect of the present invention, the content of the constituent unit (a1) is preferably 30% by mass or more, more preferably 40% by mass or more, further preferably 50% by mass or more, still further preferably 60% by mass or more, and particularly preferably 70% by mass or more and preferably 99.99% by mass or less, more preferably 99.90% by mass or less, further preferably 99.0% by mass or less, still further preferably 97.0% by mass or less, and particularly preferably 95.0% by mass or less and further may be 90.0% by mass or less or 85% by mass or less, based on the total amount (100% by mass) of the constituent units of the acrylic polymer (A), from the viewpoint of providing a pressure-sensitive adhesive composition in which the tackiness before voltage application is made better, the content of the constituent unit (a2) described above is ensured, and the cohesive force can be more improved.

### [Monomer (a2') and Constituent Unit (a2)]

Examples of the monomer (a2') include hydroxy group-containing monomers, carboxy group-containing monomers, and epoxy group-containing monomers.

These monomers (a2') may be used singly, or two or more of these monomers (a2') may be used together.

Examples of the hydroxy group-containing monomers include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; and unsaturated alcohols such as vinyl alcohol and allyl alcohol.

The number of carbon atoms of the alkyl groups of the hydroxyalkyl (meth)acrylates is preferably 1 to 10, more preferably 1 to 8, further preferably 1 to 6, and still further preferably 2 to 4, and the alkyl groups may be linear alkyl groups or branched alkyl groups.

Examples of the carboxy group-containing monomers include ethylenic unsaturated monocarboxylic acids such as (meth)acrylic acid and crotonic acid; ethylenic unsaturated dicarboxylic acids such as fumaric acid, itaconic acid, maleic acid, and citraconic acid; and 2-carboxylethyl (meth)acrylate.

Examples of the epoxy group-containing monomers include epoxy group-containing (meth)acrylates such as glycidyl (meth)acrylate, β-methylglycidyl (meth)acrylate, (3,4-epoxycyclohexyl)methyl (meth)acrylate, and 3-epoxycyclo-2-hydroxypropyl (meth)acrylate; and glycidyl crotonate and allyl glycidyl ether.

Among these, the acrylic polymer (A) used in one aspect of the present invention is preferably a copolymer having a constituent unit (a2-1) derived from a carboxy group-containing monomer, as the constituent unit (a2).

From the viewpoint, in the acrylic polymer (A) used in one aspect of the present invention, the content of the constituent unit (a2-1) is preferably 60 to 100% by mass, more preferably 70 to 100% by mass, further preferably 80 to 100% by mass, still further preferably 90 to 100% by mass, and particularly preferably 95 to 100% by mass based on the total amount (100% by mass) of the constituent unit (a2) of the acrylic polymer (A).

In the acrylic polymer (A) used in one aspect of the present invention, the content of the constituent unit (a2) is preferably 0.01% by mass or more, more preferably 0.10% by mass or more, further preferably 1.0% by mass or more, still further preferably 3.0% by mass or more, and particularly preferably 5.0% by mass or more and further may be 10.0% by mass or more or 15% by mass or more and is preferably 60% by mass or less, more preferably 50% by mass or less, further preferably 40% by mass or less, still further preferably 30% by mass or less, and particularly preferably 20% by mass or less, based on the total amount (100% by mass) of the constituent units of the acrylic polymer (A), from the viewpoint of providing a pressure-sensitive adhesive composition in which while the cohesive force is more improved, the content of the constituent unit (a1) is ensured, and the tackiness before voltage application is made better.

### [Monomer (a3') and Constituent Unit (a3)]

The monomer (a3') other than the monomers (a1') and (a2') is not particularly limited, and examples thereof include olefins such as ethylene, propylene, and isobutylene, halogenated olefins such as vinyl chloride and vinylidene chloride, diene-based monomers such as butadiene, isoprene, and chloroprene, styrene, α-methylstyrene, vinyltoluene, vinyl formate, vinyl acetate, acrylonitrile, (meth)acrylamide, (meth)acrylonitrile, (meth)acryloylmorpholine, and N-vinylpyrrolidone.

These monomers (a3') may be used singly, or two or more of these monomers (a3') may be used together.

In the acrylic polymer (A) used in one aspect of the present invention, the content of the constituent unit (a3) may be 0% by mass or more, 1% by mass or more, 5% by mass or more, 10% by mass or more, or 15% by mass and 45% by mass or less, 40% by mass or less, 35% by mass or less, 30% by mass or less, 25% by mass or less, 20% by mass or less, 15% by mass or less, 10% by mass or less, or 5% by mass or less based on the total amount (100% by mass) of the constituent units of the acrylic polymer (A).

In the pressure-sensitive adhesive composition used in one aspect of the present invention, from the viewpoint of providing a pressure-sensitive adhesive composition that has high tackiness before voltage application and whose tackiness can be easily decreased by voltage application, the amount of the component (A) blended (the content of the component (A)) is preferably 25 to 97% by mass, more preferably 30 to 95% by mass, further preferably 40 to 93% by mass, still further preferably 50 to 90% by mass, and particularly preferably 60 to 87% by mass based on the total amount (100% by mass) of the active components of the pressure-sensitive adhesive composition.

### Component (B): Ionic Compound

Examples of the ionic compound (B) used in one aspect of the present invention include one or more selected from an alkali metal salt (B1), an organic quaternary ammonium salt (B2), and an ionic liquid (B3).

Among these, the component (B) used in one aspect of the present invention preferably includes one or more selected from the alkali metal salt (B1) and the ionic liquid (B3).

In the component (B) used in one aspect of the present invention, the alkali metal salt (B1) or the ionic liquid (B3) is preferably used as the main component.

As used herein, the "main component" means a component whose content is highest, of the components constituting the component (B).

When the main component of the component (B) is the alkali metal salt (B1), the content of the component (B) other than the alkali metal salt (B1) may be less than 100 parts by mass, 0 to 90 parts by mass, 0 to 50 parts by mass, 0 to 30 parts by mass, 0 to 20 parts by mass, 0 to 10 parts by mass, 0 to 5 parts by mass, 0 to 1 part by mass, 0 to 0.1 parts by mass, 0 to 0.01 parts by mass, 0 to 0.001 parts by mass, or 0 to 0.0001 parts by mass based on the total amount 100 parts by mass of the alkali metal salt (B1).

When the main component of the component (B) is the ionic liquid (B3), the content of the component (B) other than the ionic liquid (B3) may be less than 100 parts by mass, 0 to 90 parts by mass, 0 to 50 parts by mass, 0 to 30 parts by mass, 0 to 20 parts by mass, 0 to 10 parts by mass, 0 to 5 parts by mass, 0 to 1 part by mass, 0 to 0.1 parts by mass, 0 to 0.01 parts by mass, 0 to 0.001 parts by mass, or 0 to 0.0001 parts by mass based on the total amount 100 parts by mass of the ionic liquid (B3).

In the pressure-sensitive adhesive composition used in the present invention, the blending proportion of the component (B) to the total amount 100 parts by mass of the adhesive resin (component (A)) is preferably 3 parts by mass or more, more preferably 5 parts by mass or more, more preferably 10 parts by mass or more, further preferably 13 parts by mass or more, further preferably more than 15 parts by mass, still further preferably 16 parts by mass or more, and particularly preferably 18 parts by mass or more from the viewpoint of providing a pressure-sensitive adhesive composition whose tackiness can be easily decreased by voltage application, and is preferably 200 parts by mass or less, more preferably 180 parts by mass or less, further preferably 160 parts by mass or less, further preferably 150 parts by mass or less, still further preferably 130 parts by mass or less, and particularly preferably 120 parts by mass or less and further may be 100 parts by mass or less, 90 parts by mass or less, 80 parts by mass or less, 70 parts by mass or less, 60 parts by mass or less, 50 parts by mass or less, 45 parts by mass or less, 40 parts by mass or less, 35 parts by mass or less, or 30 parts by mass or less, from the viewpoint of providing a pressure-sensitive adhesive composition having high tackiness before voltage application.

### <<Component (B1): Alkali Metal Salt>>

The alkali metal salt (B1) used in one aspect of the present invention should be a compound that is solid at ordinary temperature (25°C) but ionizes to a cation (alkali metal ion) and an anion in a liquid.

Specific examples of the alkali metal salt (B1) include MCl, MBr, MI, MAlCl₄, MAl₂Cl_{y}, MBF₄, MPF₆, MSCN, MClO₄, MNO₃, CH₃COOM, C₉H₁₉COOM, CF₃COOM, C₃F₇COOM, MCH₃SO₃, MCF₃SO₃, MC₄F₉SO₃, MC₂H₅OSO₃, MC₆H₁₃OSO₃, MC₈H₁₇OSO₃, M(CF₃SO₂)₂N, M(C₂F₅SO₂)₂N, M(C₃F₇SO₂)₂N, M(C₄F₉SO₂)₂N, M(CF₃SO₂)₃C, MAsF₆, MSbF₆, MNbF₆, MTaF₆, M(CN)₂N, M(CF₃SO₂)(CF₃CO)N, M(CH₃)₂PO₄, M(C₂H₅)₂PO₄, MCH₃(OC₂H₄)₂OSO₃, MC₆H₄(CH₃)SO₃, M(C₂F₅)₃PF₃, CH₃CH(OH)COOM, and M(FSO₂)₂N, wherein M is an alkali metal atom. M is preferably Li, Na, or K, more preferably Na or K, and further preferably Na.

These alkali metal salts (B1) may be used singly, or two or more of these alkali metal salts (B1) may be used together.

Among these, the alkali metal salt (B1) used as the component (B) in one aspect of the present invention preferably contains an alkali metal salt (B11) represented by the following general formula (b-1):

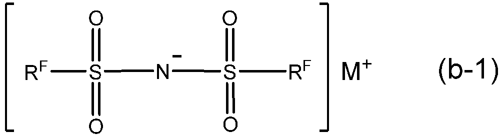

In the formula (b-1), R^{F} is each independently a fluorine atom or a fluorinated alkyl group. The number of carbon atoms of the fluorinated alkyl group is preferably 1 to 10, more preferably 1 to 8, further preferably 1 to 4, still further preferably 1 to 3, and particularly preferably 1 to 2. As used herein, the "fluorinated alkyl group" means a group in which at least one hydrogen atom of an alkyl group is replaced by a fluorine atom, and may be linear or branched.

Among fluorinated alkyl groups, perfluoroalkyl groups in which all hydrogen atoms of the alkyl group are replaced by fluorine atoms are preferred. A preferred range of the number of carbon atoms of the perfluoroalkyl groups is the same as the preferred range of the number of carbon atoms of the fluorinated alkyl group.

In one aspect of the present invention, R^{F} is preferably a fluorine atom or a perfluoroalkyl group, more preferably a fluorine atom, -CF₃, -C₂F₅, -C₃F₇, or - C₄F₉, and further preferably a fluorine atom or -CF₃.

M is an alkali metal atom (a lithium atom (Li), a sodium atom (Na), a potassium atom (K), a rubidium atom (R^{b}), a cesium atom (Cs), or a francium atom (Fr)) and preferably Li, Na, or K, more preferably Na or K, and further preferably Na.

### <<Component (B2): Organic Quaternary Ammonium Salt>>

The organic quaternary ammonium salt (B2) used in one aspect of the present invention should be a compound that is solid at ordinary temperature (25°C) and represented by the following general formula (b-2).

The organic quaternary ammonium salt (B2) may be used singly, or two or more of the organic quaternary ammonium salts (B2) may be used together.

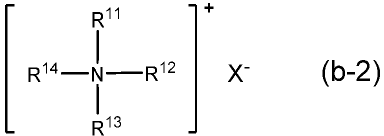

In the general formula (b-2), R¹¹ to R¹⁴ are each independently an alkyl group having 1 to 4 carbon atoms. X is F, Cl, Br, I, ClO₄, BF₄, PF₆, or [(R¹⁵)₄N]₂SO₄ (R¹⁵ is each independently an alkyl group having 1 to 4 carbon atoms) .

Specific examples of the organic quaternary ammonium salt (B2) include tetrabutyl, tetrapropyl, tetraethyl, tetramethyl, triethylbutyl, triethylpropyl, and triethylmethyl ammonium bromides or ammonium chlorides; tetrabutyl, tetrapropyl, tetraethyl, tetramethyl, triethylbutyl, triethylpropyl, and triethylmethyl ammonium tetrafluoroborates; tetrabutyl, tetrapropyl, tetraethyl, tetramethyl, triethylbutyl, triethylpropyl, and triethylmethyl ammonium hexafluorophosphates; tetrabutyl, tetrapropyl, tetraethyl, tetramethyl, triethylbutyl, triethylpropyl, and triethylmethyl ammonium perchlorates; and tetrabutyl, tetrapropyl, tetraethyl, tetramethyl, triethylbutyl, triethylpropyl, and triethylmethyl ammonium sulfates.

### <<Component (B3): Ionic Liquid>>

The ionic liquid (B3) used in one aspect of the present invention should be a compound that is a molten salt that is liquid at ordinary temperature (25°C), and includes an organic cation and an anion that is its counterion.

Examples of the organic cation constituting the ionic liquid (B3) include a cation represented by any of the following general formulas (b-3-i) to (b-3-viii). Among these, the organic cation constituting the ionic liquid (B3) is preferably the cation represented by the following general formula (b-3-ii).

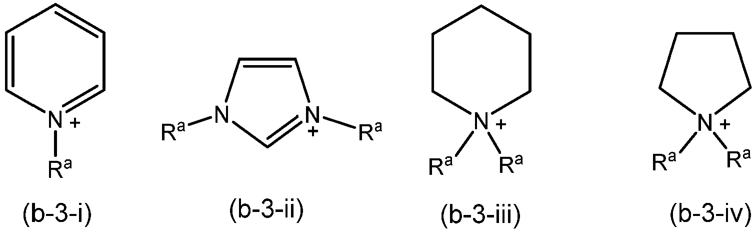

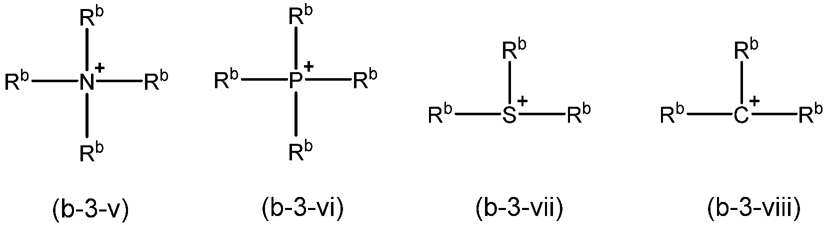

In the formulas (b-3-i) to (b-3-iv), R^{a} is each independently an alkyl group having 1 to 20 carbon atoms or an alkenyl group having 1 to 20 carbon atoms.

In the formula (b-3-v) to (b-3-viii), R^{b} is each independently a hydrogen atom, an alkyl group having 1 to 20 carbon atoms, a group represented by -(C₂H₄O)-R^{c} (n is an integer of 1 to 20, and R^{c} is an alkyl group having 1 to 20 carbon atoms), or an amino group.

Examples of the alkyl groups that can be selected as R^{a}, R^{b}, and R^{c} include a methyl group, an ethyl group, a propyl group (a n-propyl group and an i-propyl group), a butyl group (a n-butyl group, an i-butyl group, a s-butyl group, and a t-butyl group), a pentyl group (a n-pentyl group, an i-pentyl group, and a neopentyl group), a hexyl group, a heptyl group, an octyl group, a 2-ethylhexyl group, a nonyl group, a decyl group, an undecyl group, a dodecyl group, a tridecyl group, a tetradecyl group, a pentadecyl group, a hexadecyl group, a heptadecyl group, and an octadecyl group.

The alkyl groups may be linear alkyl groups or branched alkyl groups.

Examples of the alkenyl groups that can be selected as R^{a} and R^{b} include an ethenyl group (vinyl group), a propenyl group, a butenyl group, a pentenyl group, a hexenyl group, a heptenyl group, an octenyl group, a nonenyl group, a decenyl group, a dodecenyl group, a tridecenyl group, a tetradecenyl group, a pentadecenyl group, a hexadecenyl group, and an octadecenyl group.

The alkenyl groups may be linear alkenyl groups or branched alkenyl groups.

At least one hydrogen atom bonded to a carbon atom of a cation represented by either of the general formulas (b-3-i) to (b-3-ii) may be replaced by an alkyl group having 1 to 20 carbon atoms. Specific examples of the alkyl group are as described above.

Examples of the cation represented by the general formula (b-3-i), and the cation whose at least one hydrogen atom is replaced by the alkyl group include a cation represented by any of the following formulas (b-3-i-1) to (b-3-i-11):

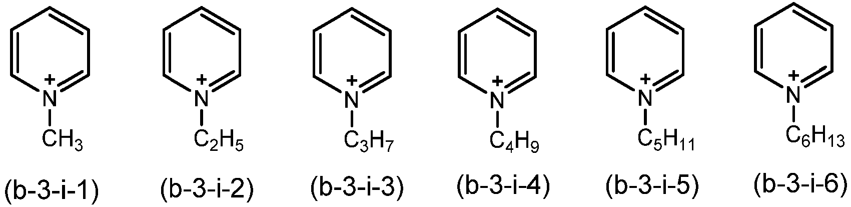

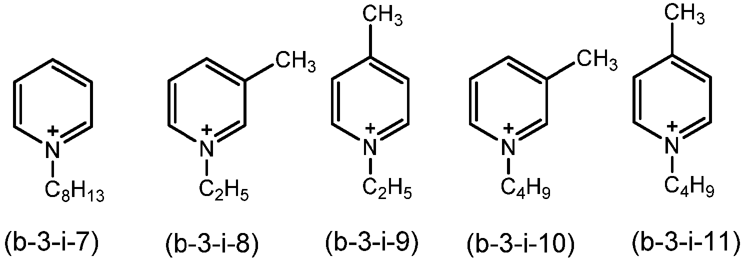

Examples of the cation represented by the general formula (b-3-ii), and the cation whose at least one hydrogen atom is replaced by the alkyl group include a cation represented by any of the following formulas (b-3-ii-1) to (b-3-ii-26). A cation represented by any of the following formulas (b-3-ii-1) to (b-3-ii-15) is preferred, a cation represented by any of the following formulas (b-3-ii-1) to (b-3-ii-3) and (b-3-ii-9) to (b-3-ii-10) is more preferred, a cation represented by any of the following formulas (b-3-ii-1) to (b-3-ii-3) is further preferred, and a cation represented by the following formula (b-3-ii-2) is still further preferred.

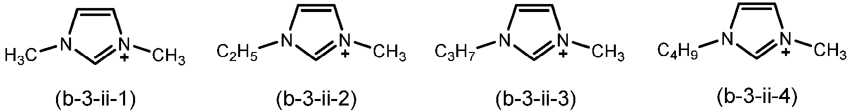

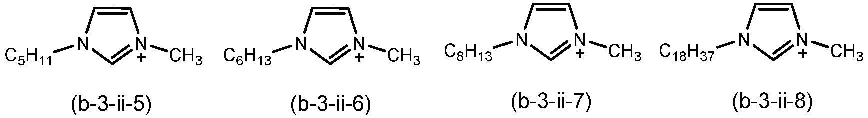

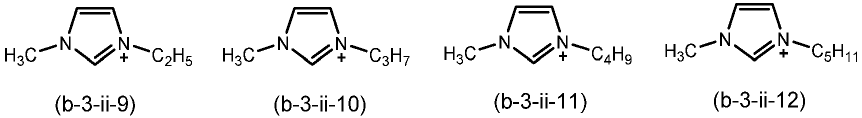

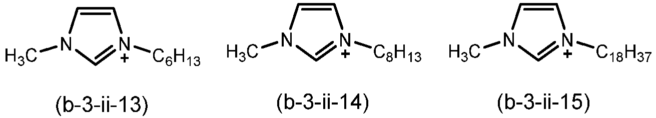

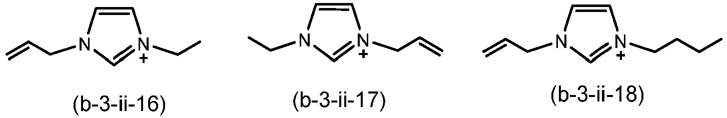

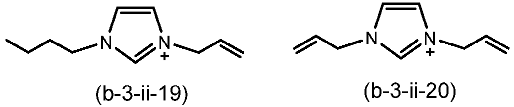

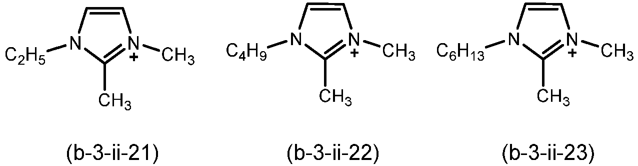

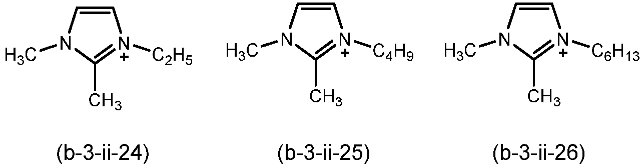

Examples of the cation represented by the general formula (b-3-iii) include a cation represented by any of the following formulas (b-3-iii-1) to (b-3-iii-6):

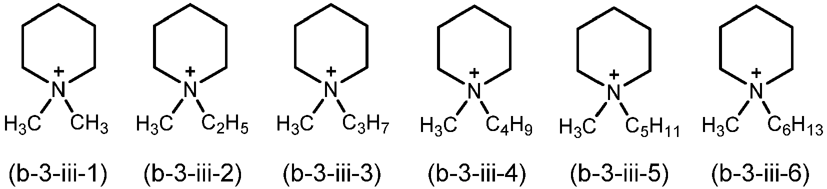

Examples of the cation represented by the general formula (b-3-iv) include a cation represented by any of the following formulas (b-3-iv-1) to (b-3-iv-6):

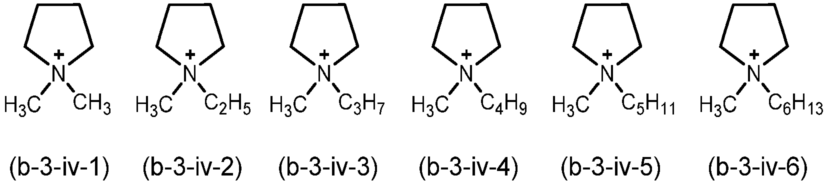

Examples of the cation represented by any of the general formulas (b-3-v) to (b-3-viii) include a cation represented by any of the following formulas:

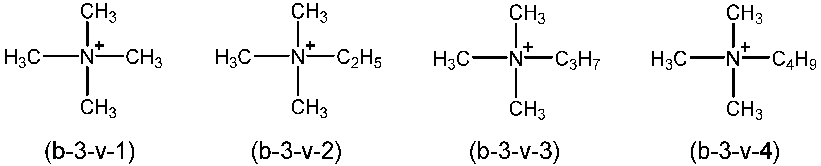

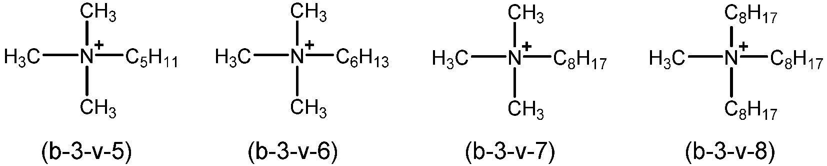

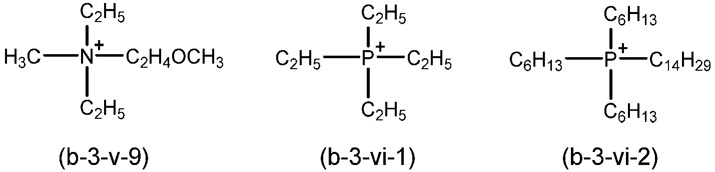

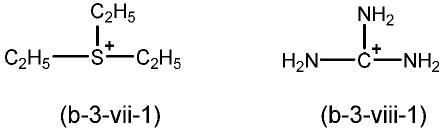

Examples of the anion constituting the ionic liquid (B3) include Cl⁻, Br⁻, I⁻, AlCl₄⁻, Al₂Cl₇⁻, BF₄⁻, PF₆⁻, SCN⁻, ClO₄⁻, NO₃⁻, CH₃COO⁻, CF₃COO⁻, CH₃SO₃⁻, CF₃SO₃⁻, C₄F₉SO₃⁻, (CF₃SO₂)₂N⁻, (C₂F₅SO₂)₂N⁻, (C₃F₇SO₂)₂N⁻, (C₄F₉SO₂)₂N⁻, (CF₃SO₂)₃C⁻, AsF₆⁻, SbF₆⁻, NbF₆⁻, TaF₆⁻, (CN)₂N⁻, C₄F₉SO₃⁻, (C₂F₅SO₂)₂N⁻, C₃F₇COO⁻, (CF₃SO₂)(CF₃CO)N⁻, C₉H₁₉COO⁻, (CH₃)₂PO₄⁻, (C₂H₅)₂PO₄⁻, CH₃OSO₃⁻, C₂H₅OSO₃⁻, C₄H₉OSO₃⁻, C₆H₁₃OSO₃⁻, C₈H₁₇OSO₃⁻, CH₃(OC₂H₄)₂OSO₃⁻, C₆H₄(CH₃)SO₃⁻, (C₂F₅)₃PF₃⁻, CH₃CH(OH)COO⁻, (FSO₂)₂N⁻, B(CN)₄⁻, C(CN)₃⁻, N(CN)₂⁻, a p-toluenesulfonate anion, and a 2-(2-methoxyethyl) ethyl sulfate anion.

Among these, as the anion constituting the ionic liquid (B3) used in one aspect of the present invention, (CF₃SO₂)₂N⁻ or (FSO₂)₂N⁻ is preferred.

### Component (C): Crosslinking Agent

The pressure-sensitive adhesive composition used in one aspect of the present invention is preferably obtained by further blending the crosslinking agent (C). By blending the crosslinking agent (C), a pressure-sensitive adhesive composition that has high tackiness before voltage application and whose tackiness can be easily decreased by voltage application is more easily prepared.

The crosslinking agent (C) may be used singly, or two or more of the crosslinking agents (C) may be used together.

Examples of the crosslinking agent (C) used in one aspect of the present invention include isocyanate-based crosslinking agents, epoxy-based crosslinking agents, imine-based crosslinking agents, and metal chelate-based crosslinking agents.

In the pressure-sensitive adhesive composition used in one aspect of the present invention, from the viewpoint of more easily preparing a pressure-sensitive adhesive composition that has high tackiness before voltage application and whose tackiness can be easily decreased by voltage application, the amount of the component (C) blended is preferably 0.001 to 10.0 parts by mass, more preferably 0.005 to 7.0 parts by mass, further preferably 0.010 to 5.0 parts by mass, still further preferably 0.015 to 2.0 parts by mass, and particularly preferably 0.020 to 1.0 parts by mass based on the total amount 100 parts by mass of the adhesive resin (component (A)).

### <Second Pressure-Sensitive Adhesive Layer>

The second pressure-sensitive adhesive layer of the pressure-sensitive adhesive sheet can be formed of the pressure-sensitive adhesive composition (x) described above when an electrically non-peelable pressure-sensitive adhesive layer is provided. The second pressure-sensitive adhesive layer can be formed of the pressure-sensitive adhesive composition (y) described above when an electrically peelable pressure-sensitive adhesive layer is provided.

The thickness of the second pressure-sensitive adhesive layer is appropriately adjusted according to the application and the like but is preferably 0.5 to 120 µm, more preferably 1 to 100 µm, further preferably 3 to 80 µm, still further preferably 5 to 70 µm, and particularly preferably 10 to 60 µm.

### <Release Material>

The release material of the pressure-sensitive adhesive sheet in one aspect of the present invention can be obtained by applying a release agent to one surface or both surfaces of a substrate for a release material.

Examples of the substrate for the release material include resin films such as polyesters such as polyethylene terephthalate, polybutylene terephthalate, and polyethylene naphthalate, polyethylene, polypropylene, polybutene, polybutadiene, polymethylpentene, polyvinyl chloride, vinyl chloride copolymers, polyurethanes, ethylene-vinyl acetate copolymers, ionomer resins, ethylene (meth)acrylic acid copolymers, polystyrene, polycarbonates, fluororesins, low density polyethylene, linear low density polyethylene, and triacetyl cellulose, paper substrates such as high quality paper, coated paper, and glassine paper, and laminated paper obtained by laminating thermoplastic resins such as polyethylene on these paper substrates.

Examples of the release agent used include rubber-based elastomers such as silicone-based resins, olefin-based resins, long chain alkyl-based resins, alkyd-based resins, fluorine-based resins, isoprene-based resins, and butadiene-based resins.

The thickness of the release material is not particularly limited but is preferably 5 to 300 µm, more preferably 10 to 200 µm. When a polyethylene terephthalate-based film is used as the substrate for the release material, the thickness of the release material is preferably 10 to 100 µm.

### [Method for Peeling Electrically Peelable Pressure-Sensitive Adhesive Sheet]

The pressure-sensitive adhesive sheet is preferably used by being affixed to an adherend including an electrically conductive material.

Examples of the electrically conductive material constituting the adherend include metals such as aluminum, tin-doped indium oxide, copper, iron, silver, platinum, and gold, and alloys of the metals. These electrically conductive materials may be used singly, or two or more of these electrically conductive materials may be used together.

The pressure-sensitive adhesive sheet can be peeled from an adherend by putting one terminal, of two terminals connected to a voltage application apparatus, into the interior of the electrically conductive pressure-sensitive adhesive layer, electrically connecting the other terminal to the electrically conductive adherend, and applying a voltage to both terminals to decrease the tack of the first pressure-sensitive adhesive layer to the electrically conductive adherend.

In the case of a configuration in which the pressure-sensitive adhesive sheet has at least one terminal connection portion into which a terminal can be inserted, at an end of the intermediate layer of the pressure-sensitive adhesive sheet, or the at least one terminal connection portion can be formed at an end of the intermediate layer, the pressure-sensitive adhesive sheet can be peeled from an adherend by putting one terminal, of two terminals connected to a voltage application apparatus, into the interior of the electrically conductive pressure-sensitive adhesive layer via the terminal connection portion, electrically connecting the other terminal to the electrically conductive adherend, and applying a voltage to both terminals to decrease the tack of the first pressure-sensitive adhesive layer to the electrically conductive adherend.

Since the pressure-sensitive adhesive sheet has such properties, the present invention also provides the following [I] a method for peeling a pressure-sensitive adhesive sheet.
[I] A method for peeling a pressure-sensitive adhesive sheet being a method for peeling an electrically peelable pressure-sensitive adhesive sheet from an electrically conductive adherend after affixing the first pressure-sensitive adhesive layer of the electrically peelable pressure-sensitive adhesive sheet to the electrically conductive adherend, including
   putting one terminal, of two terminals connected to a voltage application apparatus, into the interior of the electrically conductive pressure-sensitive adhesive layer, electrically connecting the other terminal to an electrically conductive adherend, and applying a voltage to both terminals to decrease the tack of the first pressure-sensitive adhesive layer to the electrically conductive adherend to peel the pressure-sensitive adhesive sheet from the electrically conductive adherend.

Figure 7 shows schematic diagrams showing one example of a method for peeling the pressure-sensitive adhesive sheet 1b in Figure 2, which is an electrically peelable pressure-sensitive adhesive sheet in one aspect of the present invention.

Figure 7(a) shows a state in which the release materials 31 and 32 of the pressure-sensitive adhesive sheet 1b in Figure 2 are removed, the pressure-sensitive adhesive surface of the first pressure-sensitive adhesive layer 21 is affixed to an electrically conductive adherend 200, and the pressure-sensitive adhesive surface of the second pressure-sensitive adhesive layer 22 is affixed to an adherend 300. A method for peeling the pressure-sensitive adhesive sheet 1b from the electrically conductive adherend 200 in Figure 7(a) will be described.

The pressure-sensitive adhesive sheet 1b shown in Figure 7(a) has at least one terminal connection portion into which a terminal can be inserted, at an end of the intermediate layer. Therefore, one terminal 101, of two terminals connected to a voltage application apparatus 110, is put into the interior of the electrically conductive pressure-sensitive adhesive layer 121 via the terminal connection portion. When a plurality of terminal connection portions is present, one terminal 101 should be inserted into any terminal connection portion. The terminal 101 is preferably a needle-shaped terminal in order to easily put the terminal 101 into the interior of the electrically conductive pressure-sensitive adhesive layer 121.

On the other hand, the other terminal 102 is electrically connected to the electrically conductive adherend 200.

In the case of a pressure-sensitive adhesive sheet having no terminal connection portion, like the pressure-sensitive adhesive sheet 1a shown in Figure 1(a), one terminal 101 is put into the interior of the electrically conductive pressure-sensitive adhesive layer 121 from an arbitrary position at an end of the intermediate layer.

When a pressure-sensitive adhesive sheet includes the pseudo-adhesive layer 122 having a contact part with the electrically conductive layer 13, at at least part of the ends of the intermediate layer 12, like the pressure-sensitive adhesive sheets 2a to 2b shown in Figures 5 to **6****,** it is necessary to perform the operation of peeling the pseudo-adhesive layer 122 of the intermediate layer 12 from the electrically conductive layer 13 to form a terminal connection portion. Then, the operation as shown in Figure 7(a) should be performed.

Then, by applying a voltage to both terminals, the voltage is applied to the first pressure-sensitive adhesive layer affixed to the electrically conductive adherend 200, via the electrically conductive pressure-sensitive adhesive layer 121 and the electrically conductive layer 13, and the tack of the first pressure-sensitive adhesive layer decreases. After the voltage application, as shown in Figure 7(b), the pressure-sensitive adhesive sheet can be easily peeled from the electrically conductive adherend because the tack of the first pressure-sensitive adhesive layer decreases.

The applied voltage (application voltage) is preferably 1 to 200 V, more preferably 3 to 140 V, and further preferably 6 to 120 V, and the time during which a voltage in the range is applied (application time) is preferably 1 to 180 sec, more preferably 5 to 120 sec, and further preferably 10 to 90 sec.

### [Example]

The present invention will be described in more detail below by giving an Example.

Various physical property values of components were measured by the methods described below.

### <Mass Average Molecular Weight (Mw)>

Measurement was performed under the following conditions using a gel permeation chromatograph apparatus (manufactured by Tosoh Corporation, product name "HLC-8020"), and values measured in terms of standard polystyrene were used.

### (Measurement Conditions)

- Columns: "TSK guard column HXL-H", "TSK gel GMHXL (× 2)", and "TSK gel G2000HXL " (all manufactured by Tosoh Corporation) sequentially coupled
- Column temperature: 40°C
- Developing solvent: tetrahydrofuran
- Flow rate: 1.0 mL/min

### <Aspect Ratio of Electrically Conductive Filler>

10 Randomly extracted electrically conductive filler particles were observed using a scanning electron microscope (manufactured by Hitachi High-Technologies Corporation, product name "S-4700"), "the length of the long side (H)" and "the length of the short side (L)" of each were measured, and further the "aspect ratio (H/L)" was calculated. Then, the average values of the 10 were taken as "the average of the length of the long side (H)", "the average of the length of the short side (L)", and "the average aspect ratio" of the target electrically conductive filler.

### <Acid Value of Electrically Conductive Pressure-Sensitive Adhesive Composition (xα)>

An electrically conductive pressure-sensitive adhesive composition (xα) is applied on the release-treated surface of a release film (manufactured by LINTEC Corporation, trade name "SP-PET381031", thickness: 38 µm) and dried to form an electrically conductive pressure-sensitive adhesive layer. 0.3 g (solids) of the formed electrically conductive pressure-sensitive adhesive layer is weighed, taken, and dissolved in toluene to prepare a test solution having a solid concentration of 1% by mass.

Two to three drops of an alcohol solution of phenolphthalein as an indicator are added to the test solution, and then the test solution is titrated with an alcohol solution of 0.1 N potassium hydroxide. The time when the solution turns red is taken as the end point, and from the titer and the sample mass at this time, the acid value (unit: mg KOH/g) is calculated.

### Example 1

### [Fabrication of Pressure-Sensitive Adhesive Sheet]

A pressure-sensitive adhesive sheet (50 mm wide by 50 mm long) having the same configuration as the pressure-sensitive adhesive sheet 1b shown in Figure 1 was fabricated by the following procedure.

### (1) Preparation of Pressure-Sensitive Adhesive Composition (x)

Components were added with the types and amounts blended (active component ratio) shown in Table 1, and diluted with ethyl acetate, which was a diluent solvent, to prepare a pressure-sensitive adhesive composition (x).

### [Table 1]

**Table 1**

| Component | Details | Amount blended* (parts by mass) |
|---|---|---|
| Acrylic polymer (1) | Copolymer having constituent units derived from n-butyl acrylate (BA) and acrylic acid (AAc) (constituent unit ratio: BA/AAc = 90/10 (mass ratio)), adhesive resin, Mw = 600000. | 100 |
| Isocyanate-based crosslinking agent | Manufactured by Tosoh Corporation, product name "Coronate L", isocyanate-based crosslinking agent. | 2.5 |

| | | |
|---|---|---|
| *: Active component ratio | | |

### (2) Formation of Second Pressure-Sensitive Adhesive Layer

The pressure-sensitive adhesive composition (x) prepared in the (1) was applied to the release-treated surface of release paper (manufactured by LINTEC Corporation, trade name "SP-8E Ivory", thickness: 116 µm) so that the thickness after drying was 20 µm, and dried at 100°C for 1 min to form a second pressure-sensitive adhesive layer on the release paper, followed by cutting to a size of 50 mm wide by 50 mm long to fabricate a laminate (i).

### (3) Preparation of Electrically Conductive Pressure-Sensitive Adhesive Composition (xα)

Components were added with the types and amounts blended (active component ratio) shown in Table 2, and diluted with ethyl acetate, which was a diluent solvent, to prepare an electrically conductive pressure-sensitive adhesive composition (xα). The acid value of the electrically conductive pressure-sensitive adhesive composition (xα) was 0.0 mg KOH/g.

### [Table 2]

**Table 2**

| Component | Details | Amount blended* (parts by mass) |
|---|---|---|
| Acrylic polymer (2) | Copolymer having constituent units derived from n-butyl acrylate (BA), methyl acrylate (MA), acryloylmorpholine (ACMO), and 2-hydroxyethyl acrylate (2-HEA) (constituent unit ratio: BA/MA/ACMO/2-HEA = 80/5/14/1 (mass ratio)), adhesive resin, Mw = 1000000. | 100 |
| Electrically conductive filler | Electrically conductive filler dispersion having solid concentration of 0.3% by mass prepared by adding multi-walled carbon nanotubes (product name "K-nanos 100 P", manufactured by Korea Kumho Petrochemical, cylindrical fibrous materials obtained by entanglement of plurality of single yarns, average aspect ratio (H/L): 200, average of lengths of long sides (H): 2 µm, average of lengths of short sides (L): 10 nm) to ethyl acetate and performing dispersion at peripheral speed of 8 m/sec for 150 min using a bead mill (bead size : 0.65 mm, filling rate : 85%). | 1.2 |

| | | |
|---|---|---|
| ***:** Active component ratio | | |

### (4) Fabrication of Electrically Conductive Substrate

The pressure-sensitive adhesive composition (xα) prepared in the (3) was applied on one surface of a polyethylene terephthalate (PET) film (a PET film having a thickness of 25 µm manufactured by Toray Industries, Inc.) adjusted to a size of 50 mm wide by 50 mm long, in a region 45 mm wide by 50 mm long from the left side, so that the thickness after drying was 20 µm, and dried at 100°C for 1 min to form an electrically conductive pressure-sensitive adhesive layer. The electrically conductive pressure-sensitive adhesive layer is not formed in a region 5 mm wide by 50 mm long from the right side on the PET film.

Then, an aluminum foil (manufactured by UACJ, product name "1N30", thickness: 50 µm), which was an electrically conductive layer, adjusted to a size of 50 mm wide by 50 mm long was laminated on the pressure-sensitive adhesive surface of the formed electrically conductive pressure-sensitive adhesive layer and the surface of the exposed PET film on which the electrically conductive pressure-sensitive adhesive layer was not formed, to fabricate an electrically conductive substrate.

### (5) Preparation of Electrically Peelable Pressure-Sensitive Adhesive Composition (y)

Components were added with the types and amounts blended (active component ratio) shown in Table 2, and diluted with ethyl acetate, which was a diluent solvent, to prepare an electrically peelable pressure-sensitive adhesive composition (y).

### [Table 3]

**Table 3**

| Component | Details | Amount blended* (parts by mass) |
|---|---|---|
| Acrylic polymer (3) | Copolymer having constituent units derived from n-butyl acrylate (BA), methyl acrylate (MA), and 2-hydroxyethyl acrylate (2-HEA) (constituent unit ratio: BA/MA/2-HEA = 60/20/20 (mass ratio)), adhesive resin, Mw = 600000. | 100 |
| Ionic liquid | Manufactured by DKS Co., Ltd, product name "AS-210", 1-ethyl-3-methylimidazolium bis(trifluoromethanesulfonyl)imide, ionic liquid that is liquid at ordinary temperature (25°C). | 16.0 |
| Rosin-containing diol | Manufactured by Arakawa Chemical Industries, Ltd, product name "PINECRYSTAL D-6011", rosin-containing diol, softening point = 84 to 99°C, acid value =1 mgKOH/g or less, hydroxyl value =110 to 125 mgKOH/g. | 40.0 |
| Isocyanate-based crosslinking agent | Manufactured by Tosoh Corporation, product name "Coronate L", isocyanate-based crosslinking agent. | 0.20 |
| PEG | Polyethylene glycol with Mw = 200, liquid at ordinary temperature (25°C). | 9.0 |

| | | |
|---|---|---|
| *: Active component ratio | | |

### (6) Formation of First Pressure-Sensitive Adhesive Layer

The electrically peelable pressure-sensitive adhesive composition (y) prepared in the (5) was applied on the release-treated surface of release film (manufactured by LINTEC Corporation, trade name "SP-PET381031", thickness: 38 µm) so that the thickness after drying was 50 µm, and dried at 100°C for 2 min to form a first pressure-sensitive adhesive layer on the release film, followed by cutting to a size of 50 mm wide by 50 mm long to fabricate a laminate (ii).

### (7) Fabrication of Pressure-Sensitive Adhesive Sheet

The pressure-sensitive adhesive surface of the second pressure-sensitive adhesive layer of the laminate (i) fabricated in the (2) was affixed to the PET film side of the electrically conductive substrate fabricated in the (4), and the pressure-sensitive adhesive surface of the first pressure-sensitive adhesive layer of the laminate (ii) fabricated in the (6) was affixed to the electrically conductive layer aluminum foil side of the electrically conductive substrate to fabricate a pressure-sensitive adhesive sheet having the same configuration as the pressure-sensitive adhesive sheet 1b shown in Figure 1.

### [Electrical Peelability Test]

An electrical peelability test for whether the pressure-sensitive adhesive sheet affixed to an adherend can be peeled by voltage application or not was performed based on the following method using the fabricated pressure-sensitive adhesive sheet.

First, as shown in Figure 7(a), the first pressure-sensitive adhesive layer of the pressure-sensitive adhesive sheet was affixed to an electrically conductive adherend, and the terminals of a voltage application apparatus were connected. Specifically, the pressure-sensitive adhesive surface of the first pressure-sensitive adhesive layer 21 exposed by removing the release film of the pressure-sensitive adhesive sheet fabricated in the (7) was affixed to a stainless steel plate, which was the electrically conductive adherend 200. Then, the needle-shaped terminal 101 of the voltage application apparatus 110 (manufactured by Takasago Ltd., product name "direct current power supply apparatus (KX-100H)" on the anode side was inserted from an arbitrary position in the terminal connection portion at the right end of the pressure-sensitive adhesive sheet, put into the interior of the electrically conductive pressure-sensitive adhesive layer 121 via the terminal connection portion, and electrically connected. On the other hand, the terminal 102 of the voltage application apparatus 110 on the cathode side was electrically connected to the electrically conductive adherend 200. In Figure 7(a), a configuration in which the pressure-sensitive adhesive surface of the second pressure-sensitive adhesive layer is affixed to the adherend 300 is shown, but in this test, the test was performed in a state in which the release paper was laminated as it was, without the pressure-sensitive adhesive surface of the second pressure-sensitive adhesive layer being affixed to the adherend 300.

Then, a voltage of 10 V was applied for 60 sec, and after the voltage application, the pressure-sensitive adhesive sheet was allowed to stand for 1 min.

After the standing, the pressure-sensitive adhesive sheet was peeled from the electrically conductive adherend 200 by hand as shown in Figure 7(b) in an environment of 23°C and 50% RH (relative humidity), it was confirmed that the pressure-sensitive adhesive sheet was extremely easily peeled.

### [Reference Signs List]

1a, 1b, 1c, 1d, 2a, 2b pressure-sensitive adhesive sheet
10 electrically conductive substrate
11 support
12 intermediate layer
121 electrically conductive pressure-sensitive adhesive layer
122 pseudo-adhesive layer
12a contact part
12b non-contact part
13 electrically conductive layer
21 first pressure-sensitive adhesive layer
22 second pressure-sensitive adhesive layer
31, 32 release material
X terminal connection portion
101, 102 terminal
110 voltage application apparatus
200 electrically conductive adherend
300 adherend

## Claims

1. An electrically peelable pressure-sensitive adhesive sheet (1a, 1b, 1c, 1d, 2a, 2b) comprising an electrically conductive substrate (10) having a support (11), an intermediate layer (12), and an electrically conductive layer (13) in this order, a first pressure-sensitive adhesive layer (21) having electrical peelability laminated on a side of the electrically conductive layer (13) of the electrically conductive substrate (10), and a second pressure-sensitive adhesive layer (22) laminated on a side of the support (11),
wherein the electrically conductive substrate (10) has substantially no extension portion elongating and exposed more than the first pressure-sensitive adhesive layer (21) and the second pressure-sensitive adhesive layer (22) in a surface extending direction of the electrically conductive substrate (10),
wherein at least part of the intermediate layer (12) comprises an electrically conductive pressure-sensitive adhesive layer (121),
and wherein the terms "has substantially no extension portion" and "electrical peelability" are as defined in the description.

2. The electrically peelable pressure-sensitive adhesive sheet (1a, 1b, 1c, 1d, 2a, 2b) according to claim 1, wherein the electrically conductive pressure-sensitive adhesive layer (121) is a patterned layer having a contact part (12a) and a non-contact part (12b) with the electrically conductive layer (13).

3. The electrically peelable pressure-sensitive adhesive sheet (1a, 1b, 1c, 1d, 2a, 2b) according to claim 1 or 2, wherein the intermediate layer (12) comprises the electrically conductive pressure-sensitive adhesive layer (121) and a pseudo-adhesive layer (122).

4. The electrically peelable pressure-sensitive adhesive sheet (1a, 1b, 1c, 1d, 2a, 2b) according to any one of claims 1 to 3, having at least one terminal connection portion (X) into which a terminal (101) can be inserted, at an end of the intermediate layer (12), or the at least one terminal connection portion (X) being able to be formed at an end of the intermediate layer (12).

5. The electrically peelable pressure-sensitive adhesive sheet (1a, 1b, 1c, 1d, 2a, 2b) according to claim 4, wherein the terminal connection portion (X) comprises a space comprising a non-contact part (12b) of the intermediate layer (12) with the electrically conductive layer (13).

6. The electrically peelable pressure-sensitive adhesive sheet (1a, 1b, 1c, 1d, 2a, 2b) according to claim 4, wherein at least part of an end of the intermediate layer (12) comprises a pseudo-adhesive layer (122) having a contact part (12a) with the electrically conductive layer (13), and the terminal connection portion (X) is able to be formed by peeling at least part of the contact part (12a) of the pseudo-adhesive layer (122) from the electrically conductive layer (13).

7. A method for peeling a pressure-sensitive adhesive sheet (1a, 1b, 1c, 1d, 2a, 2b) being a method for peeling the electrically peelable pressure-sensitive adhesive sheet (1a, 1b, 1c, 1d, 2a, 2b) according to any one of claims 1 to 6 from an electrically conductive adherend (200) after affixing the first pressure-sensitive adhesive layer (21) of the electrically peelable pressure-sensitive adhesive sheet (1a, 1b, 1c, 1d, 2a, 2b) to the electrically conductive adherend (200), comprising
putting one terminal, of two terminals (101, 102) connected to a voltage application apparatus (110), into the interior of the electrically conductive pressure-sensitive adhesive layer (121), electrically connecting the other terminal to an electrically conductive adherend (200), and applying a voltage to both terminals to decrease tack of the first pressure-sensitive adhesive layer (21) to the electrically conductive adherend (200) to peel the pressure-sensitive adhesive sheet (1a, 1b, 1c, 1d, 2a, 2b) from the electrically conductive adherend (200).

## Patentansprüche

1. Elektrisch abziehbare Haftkleberfolie (1a, 1b, 1c, 1d, 2a, 2b), umfassend ein elektrisch leitfähiges Substrat (10) mit einem Träger (11), einer Zwischenschicht (12) und einer elektrisch leitfähigen Schicht (13) in dieser Reihenfolge, eine erste Haftkleberschicht (21) mit elektrischer Abziehbarkeit, die auf eine Seite der elektrisch leitfähigen Schicht (13) des elektrisch leitfähigen Substrats (10) laminiert ist, und eine zweite Haftkleberschicht (22), die auf eine Seite des Trägers (11) laminiert ist,
wobei das elektrisch leitfähige Substrat (10) im Wesentlichen keinen Erweiterungsabschnitt aufweist, der sich verlängert, und mehr als die erste Haftkleberschicht (21) und die zweite Haftkleberschicht (22) in einer Oberflächenerweiterungsrichtung des elektrisch leitfähigen Substrats (10) freiliegen,
wobei wenigstens ein Teil der Zwischenschicht (12) eine elektrisch leitfähige Haftkleberschicht (121) umfasst,
und wobei die Begriffe "weist im Wesentlichen keinen Erweiterungsabschnitt auf" und "elektrische Abziehbarkeit" wie in der Beschreibung definiert sind.

2. Elektrisch abziehbare Haftkleberfolie (1a, 1b, 1c 1d, 2a, 2b) nach Anspruch 1, wobei die elektrisch leitfähige Haftkleberschicht (121) eine gemusterte Schicht ist, die einen Kontaktteil (12a) und einen Nicht-Kontaktteil (12b) mit der elektrisch leitfähigen Schicht (13) aufweist.

3. Elektrisch abziehbare Haftkleberfolie (1a, 1b, 1c, 1d, 2a, 2b) nach Anspruch 1 oder 2, wobei die Zwischenschicht (12) die elektrisch leitfähige Haftkleberschicht (121) und eine Pseudokleberschicht (122) umfasst.

4. Elektrisch abziehbare Haftkleberfolie (1a, 1b, 1c, 1d, 2a, 2b) nach einem der Ansprüche 1 bis 3 mit wenigstens einem Klemmenverbindungsabschnitt (X), in den eine Klemme (101) an einem Ende der Zwischenschicht (12) eingesetzt werden kann oder wobei der wenigstens eine Klemmenverbindungsabschnitt (X) an einem Ende der Zwischenschicht (12) ausgebildet sein kann.

5. Elektrisch abziehbare Haftkleberfolie (1a, 1b, 1c, 1d, 2a, 2b) nach Anspruch 4, wobei der Klemmenverbindungsabschnitt (X) einen Raum umfasst, der einen Nicht-Kontaktteil (12b) der Zwischenschicht (12) mit der elektrisch leitfähigen Schicht (13) umfasst.

6. Elektrisch abziehbare Haftkleberfolie (1a, 1b, 1c, 1d, 2a, 2b) nach Anspruch 4, wobei wenigstens ein Teil eines Endes der Zwischenschicht (12) eine Pseudo-Kleberschicht (122) umfasst, die einen Kontaktteil (12a) mit der elektrisch leitfähigen Schicht (13) aufweist, und der Klemmenverbindungsabschnitt (X) durch Abziehen wenigstens eines Teils des Kontaktteils (12a) der Pseudo-Kleberschicht (122) von der elektrisch leitfähigen Schicht (13) ausgebildet werden kann.

7. Verfahren zum Abziehen einer Haftklebefolie (1a, 1b, 1c, 1d, 2a, 2b), das ein Verfahren zum Abziehen der elektrisch abziehbaren Haftkleberfolie (1a, 1b, 1c, 1d, 2a, 2b) nach einem der Ansprüche 1 bis 6 von einer elektrisch leitfähigen Klebefläche (200) nach dem Aufbringen der ersten Haftkleberschicht (21) der elektrisch abziehbaren Haftkleberfolie (1a, 1b, 1c, 1d, 2a, 2b) auf die elektrisch leitfähige Klebefläche (200) ist, umfassend:
Platzieren einer Klemme von zwei mit einer Spannungsanlegeeinrichtung (110) verbundenen Klemmen (101, 102) in das Innere der elektrisch leitfähigen Haftkleberschicht (121), elektrisches Verbinden der anderen Klemme mit einer elektrisch leitfähigen Klebefläche (200) und Anlegen einer Spannung an beide Klemmen, um die Klebrigkeit der ersten Haftkleberschicht (21) an der elektrisch leitfähigen Klebefläche (200) zu verringern, um die Haftkleberfolie (1a, 1b, 1c, 1d, 2a, 2b) von der elektrisch leitfähigen Klebefläche (200) abzuziehen.

## Revendications

1. Feuille adhésive sensible à la pression et électriquement pelable (1a, 1b, 1c, 1d, 2a, 2b) comprenant un substrat électroconducteur (10) ayant un support (11), une couche intermédiaire (12), et une couche électroconductrice (13) dans cet ordre, une première couche adhésive sensible à la pression (21) ayant une pelabilité électrique stratifiée sur une face de la couche électroconductrice (13) du substrat électroconducteur (10), et une seconde couche adhésive sensible à la pression (22) stratifiée sur une face du support (11),
dans laquelle le substrat électroconducteur (10) n'a sensiblement aucune portion d'extension s'allongeant et exposée plus que la première couche adhésive sensible à la pression (21) et la seconde couche adhésive sensible à la pression (22) dans une direction d'extension de surface du substrat électroconducteur (10),
dans laquelle au moins une partie de la couche intermédiaire (12) comprend une couche adhésive sensible à la pression électroconductrice (121),
et dans laquelle les termes « n'a sensiblement aucune portion d'extension » et « pelabilité électrique » sont tels que définis dans la description.

2. Feuille adhésive sensible à la pression et électriquement pelable (1a, 1b, 1c, 1d, 2a, 2b) selon la revendication 1, dans laquelle la couche adhésive sensible à la pression électroconductrice (121) est une couche à motif ayant une partie de contact (12a) et une partie de non-contact (12b) avec la couche électroconductrice (13).

3. Feuille adhésive sensible à la pression et électriquement pelable (1a, 1b, 1c, 1d, 2a, 2b) selon la revendication 1 ou 2, dans laquelle la couche intermédiaire (12) comprend la couche adhésive sensible à la pression électroconductrice (121) et une couche pseudo-adhésive (122).

4. Feuille adhésive sensible à la pression et électriquement pelable (1a, 1b, 1c, 1d, 2a, 2b) selon l'une quelconque des revendications 1 à 3, ayant au moins une portion de connexion de borne (X) dans laquelle une borne (101) peut être insérée, à une extrémité de la couche intermédiaire (12), ou
l'au moins une portion de connexion de borne (X) étant capable d'être formée à une extrémité de la couche intermédiaire (12).

5. Feuille adhésive sensible à la pression et électriquement pelable (1a, 1b, 1c, 1d, 2a, 2b) selon la revendication 4, dans laquelle la portion de connexion de borne (X) comprend un espace comprenant une partie de non-contact (12b) de la couche intermédiaire (12) avec la couche électroconductrice (13).

6. Feuille adhésive sensible à la pression et électriquement pelable (1a, 1b, 1c, 1d, 2a, 2b) selon la revendication 4, dans laquelle au moins une partie d'une extrémité de la couche intermédiaire (12) comprend une couche pseudo-adhésive (122) ayant une partie de contact (12a) avec la couche électroconductrice (13), et la portion de connexion de borne (X) est capable d'être formée en pelant, de la couche électroconductrice (13), au moins une partie de la partie de contact (12a) de la couche pseudo-adhésive (122).

7. Procédé pour décoller une feuille adhésive sensible à la pression (1a, 1b, 1c, 1d, 2a, 2b) étant un procédé pour peler, d'une pièce à adhérer électroconductrice (200), la feuille adhésive sensible à la pression et électriquement pelable (1a, 1b, 1c, 1d, 2a, 2b) selon l'une quelconque des revendications 1 à 6, après d'apposition de la première couche adhésive sensible à la pression (21) de la feuille adhésive sensible à la pression et électriquement pelable (1a, 1b, 1c, 1d, 2a, 2b) sur la pièce à adhérer électroconductrice (200), comprenant :
le placement d'une borne, de deux bornes (101, 102) connectées à un appareil d'application de tension (110), à l'intérieur de la couche adhésive sensible à la pression électroconductrice (121), la connexion électrique de l'autre borne à une pièce à adhérer électroconductrice (200), et l'application d'une tension sur les deux bornes pour réduire l'adhésion de la première couche adhésive sensible à la pression (21) à la pièce à adhérer électroconductrice (200) pour peler, de la pièce à adhérer électroconductrice (200), la feuille adhésive sensible à la pression (1a, 1b, 1c, 1d, 2a, 2b).
